(19) Europäisches Patentamt
European Patent Office
Office européen des brevets

(11) EP 3 448 930 B1

# (12) EUROPEAN PATENT SPECIFICATION

(45) Date of publication and mention of the grant of the patent:
**11.11.2020 Bulletin 2020/46**

(21) Application number: **17723756.7**

(22) Date of filing: **11.04.2017**

(51) Int Cl.:
***C08L 53/02*** *(2006.01)*
***C08L 71/12*** *(2006.01)*
***C08K 5/3435*** *(2006.01)*
***C08L 23/00*** *(2006.01)*
***C08L 23/12*** *(2006.01)*
***C08L 23/16*** *(2006.01)*
***C08L 23/18*** *(2006.01)*
***H01B 3/30*** *(2006.01)*
***H01B 3/42*** *(2006.01)*
***H01B 3/46*** *(2006.01)*
***H01B 7/295*** *(2006.01)*

(86) International application number:
**PCT/IB2017/052097**

(87) International publication number:
**WO 2017/187286 (02.11.2017 Gazette 2017/44)**

## (54) POLY(PHENYLENE ETHER) COMPOSITION AND ARTICLE

POLY(PHENYLENETHER)-ZUSAMMENSETZUNG UND ARTIKEL

COMPOSITION DE POLY(PHÉNYLÈNE ÉTHER) ET ARTICLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.04.2016 US 201662326993 P**

(43) Date of publication of application:
**06.03.2019 Bulletin 2019/10**

(73) Proprietor: **SABIC Global Technologies B.V.**
**4612 PX Bergen op Zoom (NL)**

(72) Inventor: **GAN, Haiyang**
**Shanghai 201319 (CN)**

(74) Representative: **Lang, Johannes**
**Bardehle Pagenberg Partnerschaft mbB**
**Patentanwälte, Rechtsanwälte**
**Prinzregentenplatz 7**
**81675 München (DE)**

(56) References cited:
**WO-A2-2008/106363**
**WO-A2-2010/030478**
**WO-A2-2013/121363**
**US-A- 6 153 676**
**US-A1- 2006 068 317**
**US-A1- 2006 247 338**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 448 930 B1

## Description

BACKGROUND OF THE INVENTION

In the consumer electronics market, insulated conductors and jacketed cables are widely used to charge devices, and to transfer data to and from devices. Devices are often sold in a variety of colors, with matching colored insulated conductors and/or jacketed cables. Insulation and jacketing compositions containing poly(phenylene ether)s are known to exhibit many desirable properties, including flexibility, heat resistance, flame retardancy, and colorability. However, light-colored versions of these compositions can exhibit undesirable color changes (e.g., yellowing) on exposure to ultraviolet radiation. And while the incorporation of ultraviolet absorbers to such compositions can reduce unwanted color changes, relatively high concentrations of the ultraviolet absorbers can be required and be accompanied by unwanted migration of the ultraviolet absorber, which can lead to spatially non-uniform ultraviolet resistance and accumulation on the surface of the insulated conductor or jacketed cable. Some ultraviolet absorbers are also associated with staining in the presence of metallic copper (e.g., copper wire). WO 2013/121363 A2 D1 is directed to providing stain and color change resistant poly(phenylene ether) compositions, which include specific amounts of a poly(phenylene ether), a hydrogenated block copolymer of an alkenyl aromatic monomer and a conjugated diene, a flame retardant, and an anti-UV agent that includes a trisaryl-1,3,5-triazine. US 6 153 676 A relates to polyolefins stabilized with a particular hindered amine light stabilizer (HALS). US 2006/0068317 A1 describes compositions comprising a poly(arylene ether), a poly(alkenyl aromatic) resin, a bis(hydroxy benzene) diphosphate, a hindered amine light stabilizer (HALS), and an ultraviolet absorbing compound, wherein the composition has a color shift (dE) less than 6. US 2006/0247338 A1 discloses a thermoplastic composition containing a poly(arylene ether) resin, a vinyl aromatic resin, a hindered amine light stabilizer (HALS), an ultraviolet light absorbing compound, and 0.1 to 2 % by weight of titanium dioxide. There remains a need for light-colored poly(phenylene ether)-containing compositions that exhibit stability to ultraviolet radiation while reducing or eliminating migration of ultraviolet absorber to the surface of an insulated conductor or jacketed cable, and staining in the presence of metallic copper.

BRIEF SUMMARY OF EMBODIMENTS OF THE INVENTION

One embodiment is a composition, comprising: 15 to 35 parts by weight of a poly(phenylene ether); 23 to 43 parts by weight of a hydrogenated block copolymer of an alkenyl aromatic monomer and a conjugated diene; 10 to 30 parts by weight of a polyolefin; 15 to 35 parts by weight of a flame retardant; and 0.2 to 5 parts by weight of a hindered amine light stabilizer having the structure

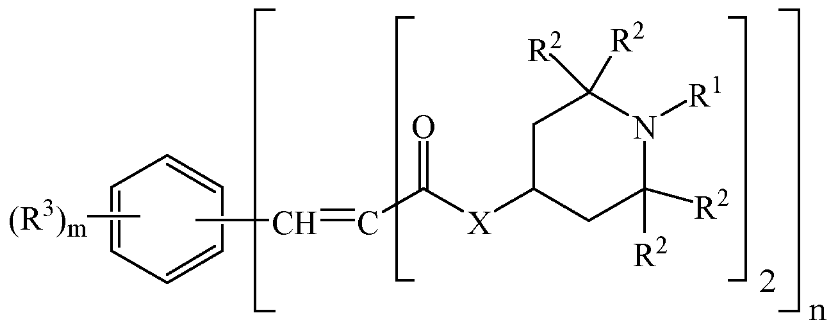

wherein $R^1$ and $R^2$ are independently at each occurrence hydrogen or $C_1$-$C_4$ alkyl; $R^3$ is independently at each occurrence hydroxyl, $C_1$-$C_6$ alkyl, or $C_1$-$C_6$ alkoxyl; X is independently at each occurrence -O- or -$NR^4$-, wherein $R^4$ is hydrogen or $C_1$-$C_6$ alkyl; n is 1, 2, or 3; and m is 0 to (6-n); wherein the composition comprises zero to less than 0.5 part by weight of benzotriazole ultraviolet absorbing agents; and wherein all parts by weight are based on 100 parts by weight total of the poly(phenylene ether), the hydrogenated block copolymer, the polyolefin, and the flame retardant.

Another embodiment is an insulated conductor, comprising: a conductor; and an insulating covering disposed over the conductor; wherein the insulating covering comprises a composition comprising 15 to 35 parts by weight of a poly(phenylene ether); 23 to 43 parts by weight of a hydrogenated block copolymer of an alkenyl aromatic monomer and a conjugated diene; 10 to 30 parts by weight of a polyolefin; 15 to 35 parts by weight of a flame retardant; and 0.2 to 5 parts by weight of a hindered amine light stabilizer having the structure

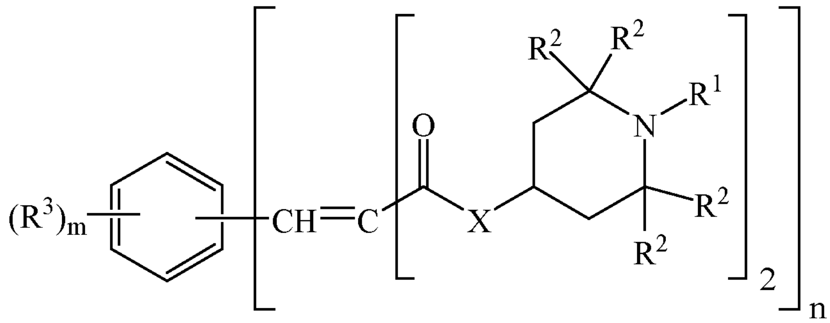

wherein $R^1$ and $R^2$ are independently at each occurrence hydrogen or $C_1$-$C_4$ alkyl; $R^3$ is independently at each occurrence hydroxyl, $C_1$-$C_6$ alkyl, or $C_1$-$C_6$ alkoxyl; X is independently at each occurrence -O- or -$NR^4$-, wherein $R^4$ is hydrogen or $C_1$-$C_6$ alkyl; n is 1, 2, or 3; and m is 0 to (6-n); wherein the composition comprises zero to less than 0.5 part by weight of benzotriazole ultraviolet absorbing agents; and wherein all parts by weight are based on 100 parts by weight total of the poly(phenylene ether), the hydrogenated block copolymer, the polyolefin, and the flame retardant.

Another embodiment is a jacketed cable, comprising: a conductor; an insulating covering surrounding the conductor; and a jacket surrounding the insulation; wherein the jacket comprises a composition comprising 15 to 35 parts by weight of a poly(phenylene ether); 23 to 43 parts by weight of a hydrogenated block copolymer of an alkenyl aromatic monomer and a conjugated diene; 10 to 30 parts by weight of a polyolefin; 15 to 35 parts by weight of a flame retardant; and 0.2 to 5 parts by weight of a hindered amine light stabilizer having the structure

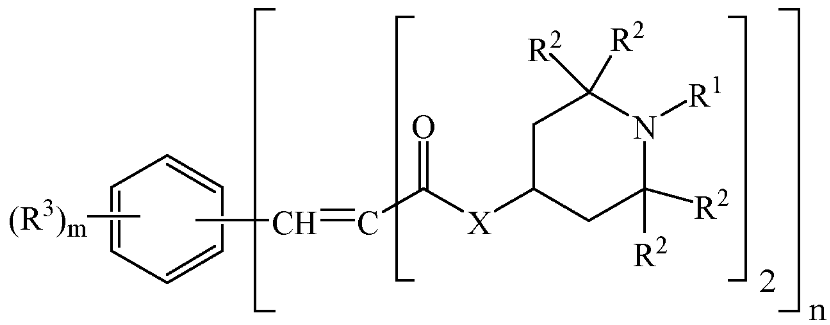

wherein $R^1$ and $R^2$ are independently at each occurrence hydrogen or $C_1$-$C_4$ alkyl; $R^3$ is independently at each occurrence hydroxyl, $C_1$-$C_6$ alkyl, or $C_1$-$C_6$ alkoxyl; X is independently at each occurrence -O- or -$NR^4$-, wherein $R^4$ is hydrogen or $C_1$-$C_6$ alkyl; n is 1, 2, or 3; and m is 0 to (6-n); wherein the composition comprises zero to less than 0.5 part by weight of benzotriazole ultraviolet absorbing agents; and wherein all parts by weight are based on 100 parts by weight total of the poly(phenylene ether), the hydrogenated block copolymer, the polyolefin, and the flame retardant.

Another embodiment is an injection molded article, comprising a composition comprising: 15 to 35 parts by weight of a poly(phenylene ether); 23 to 43 parts by weight of a hydrogenated block copolymer of an alkenyl aromatic monomer and a conjugated diene; 10 to 30 parts by weight of a polyolefin; 15 to 35 parts by weight of a flame retardant; and 0.2 to 5 parts by weight of a hindered amine light stabilizer having the structure

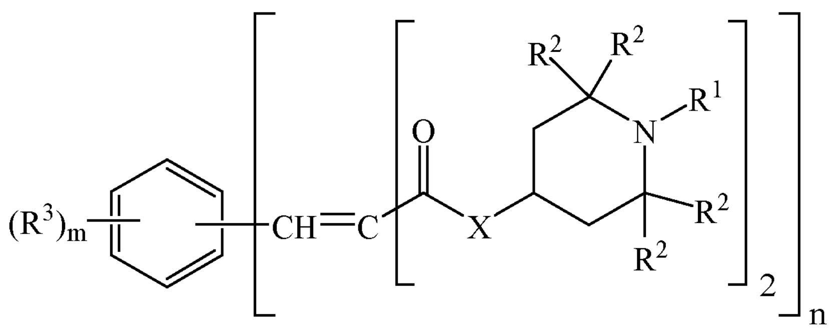

wherein $R^1$ and $R^2$ are independently at each occurrence hydrogen or $C_1$-$C_4$ alkyl; $R^3$ is independently at each occurrence

hydroxyl, $C_1$-$C_6$ alkyl, or $C_1$-$C_6$ alkoxyl; X is independently at each occurrence -O- or -$NR^4$-, wherein $R^4$ is hydrogen or $C_1$-$C_6$ alkyl; n is 1, 2, or 3; and m is 0 to (6-n); wherein the composition comprises zero to less than 0.5 part by weight of benzotriazole ultraviolet absorbing agents; and wherein all parts by weight are based on 100 parts by weight total of the poly(phenylene ether), the hydrogenated block copolymer, the polyolefin, and the flame retardant.

These and other embodiments are described in detail below.

BRIEF DESCRIPTION OF THE DRAWINGS

Referring now to the drawings wherein like elements are numbered alike in several FIGURES:

Figure 1 is a side view of an insulated conductor.
Figure 2 is a cross-section of an insulated conductor.
Figure 3 is a side view of a jacketed cable.
Figure 4 is a cross-section of a jacketed cable.
Figure 5 is an elevated view of a cable connector with strain relief.

DETAILED DESCRIPTION OF THE INVENTION

The present inventors have determined that a poly(phenylene ether)-containing composition containing a specific type of hindered amine light stabilizer exhibits an improved balance of properties compared to corresponding compositions with different hindered amine light stabilizers, or no hindered amine light stabilizer. Specifically, the composition exhibits color stability on exposure to ultraviolet radiation, while reducing or eliminating migration of ultraviolet absorber to the surface of an insulated conductor or jacketed cable, and reducing or eliminating staining in the presence of metallic copper.

One embodiment is a composition, comprising: 15 to 35 parts by weight of a poly(phenylene ether); 23 to 43 parts by weight of a hydrogenated block copolymer of an alkenyl aromatic monomer and a conjugated diene; 10 to 30 parts by weight of a polyolefin; 15 to 35 parts by weight of a flame retardant; and 0.2 to 5 parts by weight of a hindered amine light stabilizer having the structure

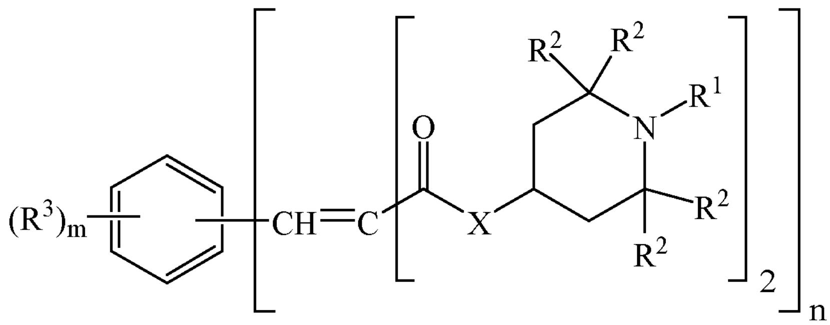

wherein $R^1$ and $R^2$ are independently at each occurrence hydrogen or $C_1$-$C_4$ alkyl; $R^3$ is independently at each occurrence hydroxyl, $C_1$-$C_6$ alkyl, or $C_1$-$C_6$ alkoxyl; X is independently at each occurrence -O- or -$NR^4$-, wherein $R^4$ is hydrogen or $C_1$-$C_6$ alkyl; n is 1, 2, or 3; and m is 0 to (6-n); wherein the composition comprises zero to less than 0.5 part by weight of benzotriazole ultraviolet absorbing agents; and wherein all parts by weight are based on 100 parts by weight total of the poly(phenylene ether), the hydrogenated block copolymer, the polyolefin, and the flame retardant.

The composition comprises a poly(phenylene ether). Poly(phenylene ether)s include those comprising repeating structural units having the formula

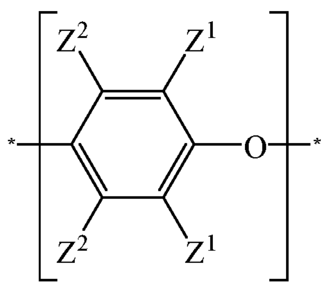

wherein each occurrence of $Z^1$ is independently halogen, unsubstituted or substituted $C_1$-$C_{12}$ hydrocarbyl provided that the hydrocarbyl group is not tertiary hydrocarbyl, $C_1$-$C_{12}$ hydrocarbylthio, $C_1$-$C_{12}$ hydrocarbyloxy, or $C_2$-$C_{12}$ halohydrocarbyloxy wherein at least two carbon atoms separate the halogen and oxygen atoms; and each occurrence of $Z^2$ is independently hydrogen, halogen, unsubstituted or substituted $C_1$-$C_{12}$ hydrocarbyl provided that the hydrocarbyl group is not tertiary hydrocarbyl, $C_1$-$C_{12}$ hydrocarbylthio, $C_1$-$C_{12}$ hydrocarbyloxy, or $C_2$-$C_{12}$ halohydrocarbyloxy wherein at least two carbon atoms separate the halogen and oxygen atoms. As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or the like, or it can contain heteroatoms within the backbone of the hydrocarbyl residue. As one example, $Z^1$ can be a di-n-butylaminomethyl group formed by reaction of a terminal 3,5-dimethyl-1,4-phenyl group with the di-n-butylamine component of an oxidative polymerization catalyst.

The poly(phenylene ether) can comprise molecules having aminoalkyl-containing end group(s), typically located in a position ortho to the hydroxyl group. Also frequently present are tetramethyldiphenoquinone (TMDQ) end groups, typically obtained from 2,6-dimethylphenol-containing reaction mixtures in which tetramethyldiphenoquinone by-product is present. The poly(phenylene ether) can be in the form of a homopolymer, a copolymer, a graft copolymer, an ionomer, or a block copolymer, as well as combinations thereof.

In some embodiments, the poly(phenylene ether) comprises a poly(phenylene ether)-polysiloxane block copolymer. As used herein, the term "poly(phenylene ether)-polysiloxane block copolymer" refers to a block copolymer comprising at least one poly(phenylene ether) block and at least one polysiloxane block.

In some embodiments, the poly(phenylene ether)-polysiloxane block copolymer is prepared by an oxidative copolymerization method. In this method, the poly(phenylene ether)-polysiloxane block copolymer is the product of a process comprising oxidatively copolymerizing a monomer mixture comprising a monohydric phenol and a hydroxyaryl-terminated polysiloxane. In some embodiments, the monomer mixture comprises 70 to 99 parts by weight of the monohydric phenol and 1 to 30 parts by weight of the hydroxyaryl-terminated polysiloxane, based on the total weight of the monohydric phenol and the hydroxyaryl-terminated polysiloxane. The hydroxyaryl-diterminated polysiloxane can comprise a plurality of repeating units having the structure

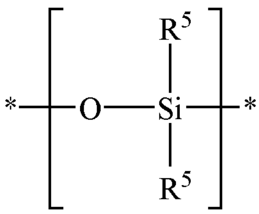

wherein each occurrence of $R^5$ is independently hydrogen, $C_1$-$C_{12}$ hydrocarbyl or $C_1$-$C_{12}$ halohydrocarbyl; and two terminal units having the structure

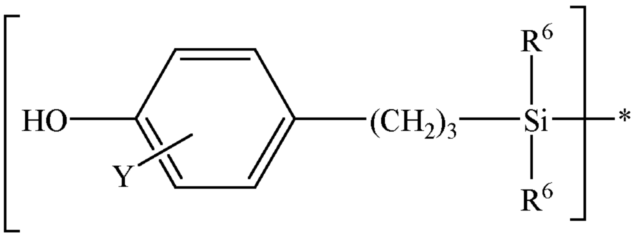

wherein Y is hydrogen, $C_1$-$C_{12}$ hydrocarbyl, $C_1$-$C_{12}$ hydrocarbyloxy, or halogen, and wherein each occurrence of $R^6$ is independently hydrogen, $C_1$-$C_{12}$ hydrocarbyl or $C_1$-$C_{12}$ halohydrocarbyl. In a very specific embodiment, each occurrence of $R^5$ and $R^6$ is methyl, and Y is methoxyl.

In some embodiments, the monohydric phenol comprises 2,6-dimethylphenol, and the hydroxyaryl-terminated polysiloxane has the structure

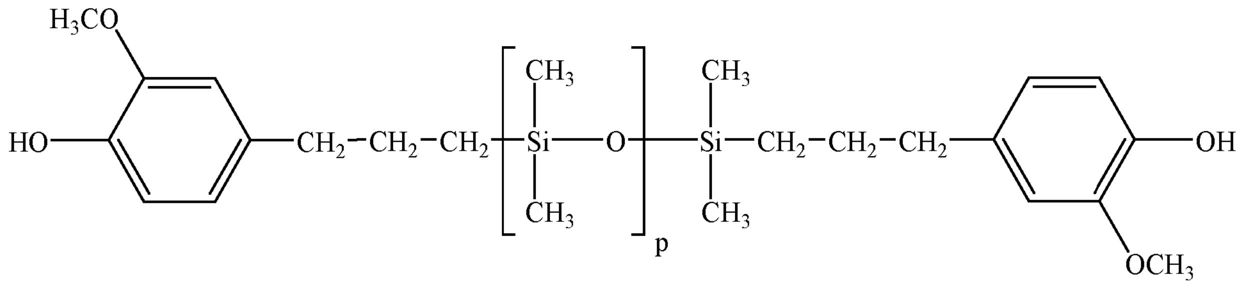

wherein p is, on average, 5 to 100, or 30 to 60.

The oxidative copolymerization method produces poly(phenylene ether)-polysiloxane block copolymer as the desired product and poly(phenylene ether) (without an incorporated polysiloxane block) as a by-product. It is not necessary to separate the poly(phenylene ether) from the poly(phenylene ether)-polysiloxane block copolymer. The poly(phenylene ether)-polysiloxane block copolymer can thus be utilized as a "reaction product" that includes both the poly(phenylene ether) and the poly(phenylene ether)-polysiloxane block copolymer. Certain isolation procedures, such as precipitation from isopropanol, make it possible to assure that the reaction product is essentially free of residual hydroxyaryl-terminated polysiloxane starting material. In other words, these isolation procedures assure that the polysiloxane content of the reaction product is essentially all in the form of poly(phenylene ether)-polysiloxane block copolymer. Detailed methods for forming poly(phenylene ether)-polysiloxane block copolymers are described in U.S. Patent Nos. 8,017,697 and 8,669,332 to Carrillo et al.

In some embodiments, the poly(phenylene ether) has an intrinsic viscosity of 0.25 to 1 deciliter per gram measured by Ubbelohde viscometer at 25°C in chloroform. Within this range, the poly(phenylene ether) intrinsic viscosity can be 0.3 to 0.65 deciliter per gram, or 0.35 to 0.5 deciliter per gram, or 0.4 to 0.5 deciliter per gram. In some embodiments, the poly(phenylene ether) is a poly(2,6-dimethyl-1,4-phenylene ether) having an intrinsic viscosity of 0.35 to 0.5 deciliter per gram. In some embodiments, the poly(phenylene ether) has an intrinsic viscosity of 0.35 to 0.5 deciliter per gram and comprises poly(phenylene ether) homopolymer and poly(phenylene ether)-polysiloxane block copolymer.

In some embodiments, the poly(phenylene ether) comprises a homopolymer or copolymer of monomers selected from the group consisting of 2,6-dimethylphenol, 2,3,6-trimethylphenol, and combinations thereof. In some embodiments, the poly(phenylene ether) comprises a poly(phenylene ether)-polysiloxane block copolymer. In these embodiments, the poly(phenylene ether)-polysiloxane block copolymer can, for example, contribute 0.05 to 2 weight percent, or 0.1 to 1 weight percent, or 0.2 to 0.8 weight percent, of siloxane groups to the composition as a whole.

Suitable poly(phenylene ether) homopolymers are commercially available as, for example, PPO™ 640 and 646 Resins from SABIC, and XYRON™ S201A and S202A Resins from Asahi Kasei Chemicals Corporation.

The composition comprises the poly(phenylene ether) in an amount of 15 to 35 parts by weight, based on 100 parts by weight total of the poly(phenylene ether), the hydrogenated block copolymer, the polyolefin, and the flame retardant. Within this range, the poly(phenylene ether) amount can be 17 to 33 parts by weight, specifically 20 to 30 parts by weight.

In addition to the poly(phenylene ether), the composition comprises a hydrogenated block copolymer of an alkenyl aromatic monomer and a conjugated diene. For brevity, this component is referred to as the "hydrogenated block copolymer". The hydrogenated block copolymer can comprise 10 to 90 weight percent of poly(alkenyl aromatic) content and 90 to 10 weight percent of hydrogenated poly(conjugated diene) content, based on the weight of the hydrogenated block copolymer. In some embodiments, the hydrogenated block copolymer is a low poly(alkenyl aromatic content) hydrogenated block copolymer in which the poly(alkenyl aromatic) content is 10 to less than 40 weight percent, or 20 to 35 weight percent, or 25 to 35 weight percent, or 30 to 35 weight percent, all based on the weight of the low poly(alkenyl aromatic) content hydrogenated block copolymer. In other embodiments, the hydrogenated block copolymer is a high poly(alkenyl aromatic content) hydrogenated block copolymer in which the poly(alkenyl aromatic) content is 40 to 90 weight percent, or 50 to 80 weight percent, or 60 to 70 weight percent, all based on the weight of the high poly(alkenyl aromatic content) hydrogenated block copolymer.

In some embodiments, the hydrogenated block copolymer has a weight average molecular weight of 40,000 to 400,000 atomic mass units. The number average molecular weight and the weight average molecular weight can be determined by gel permeation chromatography and based on comparison to polystyrene standards. In some embodiments, the hydrogenated block copolymer has a weight average molecular weight of 200,000 to 400,000 atomic mass units, or 220,000 to 350,000 atomic mass units. In other embodiments, the hydrogenated block copolymer has a weight average molecular weight of 40,000 to 200,000 atomic mass units, or 40,000 to 180,000 atomic mass units, or 40,000 to 150,000 atomic mass units.

The alkenyl aromatic monomer used to prepare the hydrogenated block copolymer can have the structure

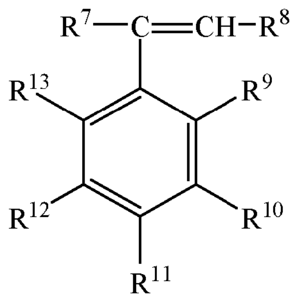

wherein $R^7$ and $R^8$ each independently represent a hydrogen atom, a $C_1$-$C_8$ alkyl group, or a $C_2$-$C_8$ alkenyl group; $R^9$ and $R^{13}$ each independently represent a hydrogen atom, a $C_1$-$C_8$ alkyl group, a chlorine atom, or a bromine atom; and $R^{10}$, $R^{11}$, and $R^{12}$ each independently represent a hydrogen atom, a $C_1$-$C_8$ alkyl group, or a $C_2$-$C_8$ alkenyl group, or $R^{10}$ and $R^{11}$ are taken together with the central aromatic ring to form a naphthyl group, or $R^{11}$ and $R^{12}$ are taken together with the central aromatic ring to form a naphthyl group. Specific alkenyl aromatic monomers include, for example, styrene, chlorostyrenes such as p-chlorostyrene, methylstyrenes such as alpha-methyl styrene and p-methyl styrene, and t-butylstyrenes such as 3-t-butyl styrene and 4-t-butylstyrene. In some embodiments, the alkenyl aromatic monomer is styrene.

The conjugated diene used to prepare the hydrogenated block copolymer can be a $C_4$-$C_{20}$ conjugated diene. Suitable conjugated dienes include, for example, 1,3-butadiene, 2-methyl-1,3-butadiene, 2-chloro-1,3-butadiene, 2,3-dimethyl-1,3-butadiene, 1,3-pentadiene, 1,3-hexadiene, and the like, and combinations thereof. In some embodiments, the conjugated diene is 1,3-butadiene, 2-methyl-1,3-butadiene, or a combination thereof. In some embodiments, the conjugated diene is 1,3-butadiene.

The hydrogenated block copolymer is a copolymer comprising (A) at least one block derived from an alkenyl aromatic compound and (B) at least one block derived from a conjugated diene, in which the aliphatic unsaturated group content in the block (B) is at least partially reduced by hydrogenation. In some embodiments, the aliphatic unsaturation in the (B) block is reduced by at least 50 percent, or at least 70 percent. The arrangement of blocks (A) and (B) includes a linear structure, a grafted structure, and a radial teleblock structure with or without a branched chain. Linear block copolymers include tapered linear structures and non-tapered linear structures. In some embodiments, the hydrogenated block copolymer has a tapered linear structure. In some embodiments, the hydrogenated block copolymer has a non-tapered linear structure. In some embodiments, the hydrogenated block copolymer comprises a (B) block that comprises random incorporation of alkenyl aromatic monomer. Linear block copolymer structures include diblock (A-B block), triblock (A-B-A block or B-A-B block), tetrablock (A-B-A-B block), and pentablock (A-B-A-B-A block or B-A-B-A-B block) structures as well as linear structures containing 6 or more blocks in total of (A) and (B), wherein the molecular weight of each (A) block can be the same as or different from that of other (A) blocks, and the molecular weight of each (B) block can be the same as or different from that of other (B) blocks. In some embodiments, the hydrogenated block copolymer is a diblock copolymer, a triblock copolymer, or a combination thereof.

In some embodiments, the hydrogenated block copolymer comprises a polystyrene-poly(ethylene-butylene-styrene)-polystyrene tapered block copolymer. For brevity, this component is referred to as the "tapered block copolymer". Tapered block copolymers are also known as controlled distribution block copolymers. In some embodiments, the tapered block copolymer has a polystyrene content of 30 to 70 weight percent, or 35 to 65 weight percent, based on the weight of the tapered block copolymer. In some embodiments, the tapered block copolymer has a melt flow rate of 0 to 10 grams per 10 minutes, measured at 260 °C and 5 kilogram load according to ASTM D1238-13. Tapered block copolymers are commercially available as, for example, KRATON™ A1535 and A1536 Resins from Kraton Performance Polymers.

The hydrogenated block copolymer can consist of polystyrene-poly(ethylenebutylene)-polystyrene triblock copolymer. Alternatively, the hydrogenated block copolymer can comprise polystyrene-poly(ethylene-butylene)-polystyrene triblock copolymer and tapered block copolymer. For example, the 5 to 40 parts by weight of the hydrogenated block copolymer can comprise 3 to 12 parts by weight of polystyrene-poly(ethylene-butylene)-polystyrene triblock copolymer and 22 to 35 parts by weight of the tapered block copolymer. Alternatively, the hydrogenated block copolymer can consist of the tapered block copolymer. In some embodiments, the hydrogenated block copolymer comprises 70 to 100 weight percent of a polystyrene-poly(ethylene-butylene-styrene)-polystyrene tapered block copolymer, based on the weight of the hydrogenated block copolymer.

In some embodiments, the hydrogenated block copolymer excludes the residue of monomers other than the alkenyl aromatic compound and the conjugated diene. In some embodiments, the hydrogenated block copolymer consists of blocks derived from the alkenyl aromatic compound and the conjugated diene. It does not comprise grafts formed from these or any other monomers. It also consists of carbon and hydrogen atoms and therefore excludes heteroatoms. In some embodiments, the hydrogenated block copolymer includes the residue of one or more acid functionalizing

agents, such as maleic anhydride.

Methods for preparing hydrogenated block copolymers are known in the art and many hydrogenated block copolymers are commercially available. Illustrative commercially available hydrogenated block copolymers include the polystyrene-poly(ethylene-propylene) diblock copolymers available from Kraton Performance Polymers Inc. as KRATON™ G1701 (having about 37 weight percent polystyrene) and G1702 (having about 28 weight percent polystyrene); the polystyrene-poly(ethylene-butylene)-polystyrene triblock copolymers available from Kraton Performance Polymers Inc.as KRATON™ G1641 (having about 33 weight percent polystyrene), G1650 (having about 30 weight percent polystyrene), G1651 (having about 33 weight percent polystyrene), and G1654 (having about 31 weight percent polystyrene); and the polystyrene-poly(ethylene-ethylene/propylene)-polystyrene triblock copolymers available from Kuraray as SEPTON™ S4044, S4055, S4077, and S4099. Additional commercially available hydrogenated block copolymers include polystyrene-poly(ethylene-butylene)-polystyrene (SEBS) triblock copolymers available from Dynasol as CALPRENE™ H6140 (having about 31 weight percent polystyrene), H6170 (having about 33 weight percent polystyrene), H6171 (having about 33 weight percent polystyrene), and H6174 (having about 33 weight percent polystyrene), and from Kuraray as SEPTON™ 8006 (having about 33 weight percent polystyrene) and 8007 (having about 30 weight percent polystyrene); polystyrene-poly(ethylenebutylene-styrene)-polystyrene tapered block copolymers available from Kraton Performance Polymers as KRATON™ A1535 (having 56.3-60.3 weight percent polystyrene) and A1536 (having 37-44 weight percent polystyrene); polystyrene-poly(ethylene-propylene)-polystyrene (SEPS) copolymers available from Kuraray as SEPTON™ 2006 (having about 35 weight percent polystyrene) and 2007 (having about 30 weight percent polystyrene); and oil-extended compounds of these hydrogenated block copolymers available from Kraton Performance Polymers Inc.as KRATON™ G4609 (containing about 45% mineral oil, and the SEBS having about 33 weight percent polystyrene) and G4610 (containing about 31% mineral oil, and the SEBS having about 33 weight percent polystyrene); and from Asahi as TUFTEC™ H1272 (containing about 36% oil, and the SEBS having about 35 weight percent polystyrene). Mixtures of two of more hydrogenated block copolymers can be used.

The composition comprises the hydrogenated block copolymer in an amount of 23 to 43 parts by weight, based on 100 parts by weight total of the poly(phenylene ether), the hydrogenated block copolymer, the polyolefin, and the flame retardant. Within this range, the hydrogenated block copolymer amount can be 25 to 41 parts by weight, or 28 to 38 parts by weight.

In addition to the poly(phenylene ether) and the hydrogenated block copolymer, the composition comprises a polyolefin. Polyolefins include polyethylenes (including high density polyethylene (HDPE), low density polyethylene (LDPE), medium density polyethylene (MDPE), and linear low density polyethylene (LLDPE)), polypropylenes (including atactic, syndiotactic, and isotactic polypropylenes), and polybutenes (including polyisobutylenes). Polyolefins further include ethylene/alpha-olefin copolymers, such as copolymers of ethylene and propylene, copolymers of ethylene and 1-butene, copolymers of ethylene and 1-hexene, and copolymers of ethylene and 1-octene. Additionally, copolymers of olefins can also be used, such as copolymers of polypropylene with rubber and polyethylene with rubber. Copolymers of polypropylene and rubber are sometimes referred to as impact modified polypropylene. Such copolymers are typically heterophasic and have sufficiently long sections of each component to have both amorphous and crystalline phases. Additionally the polyolefin can comprise a combination of homopolymer and copolymer, a combination of homopolymers having different melt temperatures, and/or a combination of homopolymers having a different melt flow rate. In some embodiments, the polyolefin comprises a high density polyethylene (HDPE). The high density polyethylene can have a density of 0.941 to 0.965 grams per milliliter. In some embodiments, the polyolefin has a melt flow rate (MFR) of 0.3 to 10 grams per ten minutes (g/10 min). Specifically, the melt flow rate can be 0.3 to 5 grams per ten minutes. Melt flow rate can be determined according to ASTM D1238-10 using either powdered or pelletized polyolefin, a load of 2.16 kilograms and a temperature suitable for the polyolefin (190°C for ethylene-based polyolefins and 230°C for propylene-based polyolefins).

The composition comprises 10 to 30 parts by weight of the polyolefin, based on 100 parts by weight total of the poly(phenylene ether), the hydrogenated block copolymer, the polyolefin, and the flame retardant. Within this range, the polyolefin amount can be 12 to 26 parts by weight, or 14 to 24 parts by weight.

In some embodiments, the polyolefin comprises 35 to 55 weight percent polypropylene, 30 to 50 weight percent polybutene, and 5 to 25 weight percent ethylene-propylene copolymer, based on the weight of the polyolefin.

In addition to the poly(phenylene ether), the hydrogenated block copolymer, and the polyolefin, the composition comprises a flame retardant. A flame retardant is a chemical compound or mixture of chemical compounds capable of improving the flame retardancy of the composition. Suitable flame retardants include organophosphate esters, metal dialkylphosphinates, bis(phenoxy)phosphazenes, nitrogen-containing flame retardants, metal hydroxides, and combinations thereof.

In some embodiments, the flame retardant comprises an organophosphate ester. Exemplary organophosphate ester flame retardants include phosphate esters comprising phenyl groups, substituted phenyl groups, or a combination of phenyl groups and substituted phenyl groups, bis-aryl phosphate esters based upon resorcinol such as, for example, resorcinol bis(diphenyl phosphate), as well as those based upon bisphenols such as, for example, bisphenol A bis(diphenyl phosphate). In some embodiments, the organophosphate ester is selected from tris(alkylphenyl) phosphates (for example, CAS Reg. No. 89492-23-9 or CAS Reg. No. 78-33-1), resorcinol bis(diphenyl phosphate) (CAS Reg. No. 57583-54-7), bisphenol A bis(diphenyl phosphate) (CAS Reg. No. 181028-79-5), triphenyl phosphate (CAS Reg. No. 115-86-6), tris(isopropylphenyl) phosphates (for example, CAS Reg. No. 68937-41-7), t-butylphenyl diphenyl phosphates (CAS Reg. No. 56803-37-3), bis(t-butylphenyl) phenyl phosphates (CAS Reg. No. 65652-41-7), tris(t-butylphenyl) phosphates (CAS Reg. No. 78-33-1), and combinations thereof. In some embodiments, the flame retardant comprises bisphenol A bis(diphenyl phosphate) (CAS Reg. No. 181028-79-5).

In some embodiments, the flame retardant comprises a metal dialkylphosphinate. As used herein, the term "metal dialkylphosphinate" refers to a salt comprising at least one metal cation and at least one dialkylphosphinate anion. In some embodiments, the metal dialkylphosphinate has the formula

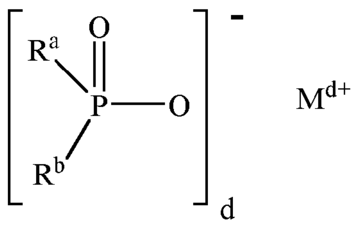

wherein $R^a$ and $R^b$ are each independently $C_1$-$C_6$ alkyl; M is calcium, magnesium, aluminum, or zinc; and d is 2 or 3. Examples of $R^a$ and $R^b$ include methyl, ethyl, n-propyl, isopropyl, n-butyl, tert-butyl, and n-pentyl. In some embodiments, $R^a$ and $R^b$ are ethyl, M is aluminum, and d is 3 (that is, the metal dialkylphosphinate is aluminum tris(diethylphosphinate)).

In some embodiments, the flame retardant comprises a nitrogen-containing flame retardant. Nitrogen-containing flame retardants include those comprising a nitrogen-containing heterocyclic base and a phosphate or pyrophosphate or polyphosphate acid. In some embodiments, the nitrogen-containing flame retardant has the formula

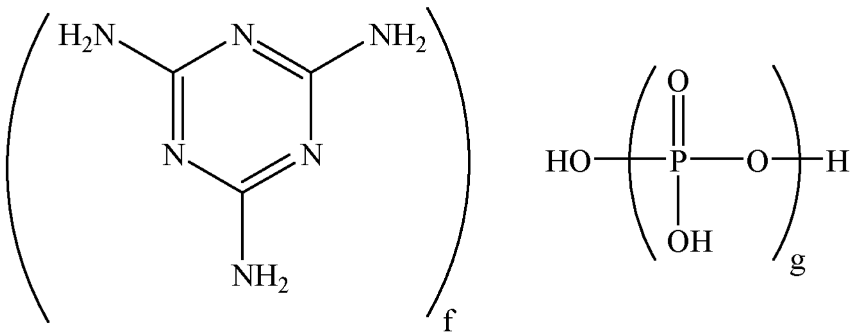

wherein g is 1 to 10,000, and the ratio of f to g is 0.5:1 to 1.7:1, specifically 0.7:1 to 1.3:1, more specifically 0.9:1 to 1.1:1. It will be understood that this formula includes species in which one or more protons are transferred from the phosphate group(s) to the melamine group(s). When g is 1, the nitrogen-containing flame retardant is melamine phosphate (CAS Reg. No. 20208-95-1). When g is 2, the nitrogen-containing flame retardant is melamine pyrophosphate (CAS Reg. No. 15541 60-3). When g is, on average, greater than 2, the nitrogen-containing flame retardant is a melamine polyphosphate (CAS Reg. No. 56386-64-2). In some embodiments, the nitrogen-containing flame retardant is melamine pyrophosphate, melamine polyphosphate, or a mixture thereof. In some embodiments in which the nitrogen-containing flame retardant is melamine polyphosphate, g has an average value of greater than 2 to 10,000, specifically 5 to 1,000, more specifically 10 to 500. In some embodiments in which the nitrogen-containing flame retardant is melamine polyphosphate, g has an average value of greater than 2 to 500. Methods for preparing melamine phosphate, melamine pyrophosphate, and melamine polyphosphate are known in the art, and all are commercially available. For example, melamine polyphosphates may be prepared by reacting polyphosphoric acid and melamine, as described, for example, in U.S. Pat. No. 6,025,419 to Kasowski et al., or by heating melamine pyrophosphate under nitrogen at 290°C to constant weight, as described in U.S. Patent No. 6,015,510 to Jacobson et al. In some embodiments, the nitrogen-containing flame retardant comprises melamine cyanurate.

In some embodiments, the flame retardant includes melamine polyphosphate (CAS Reg. No. 15541-60-3). In some embodiments, the melamine polyphosphate has a number average molecular weight of 1000 to 200,000 grams/mole, or 2000 to 100,000 grams/mole.

In some embodiments, the flame retardant comprises a metal hydroxide. Suitable metal hydroxides include all

those capable of providing fire retardancy, as well as combinations of such metal hydroxides. The metal hydroxide can be chosen to have substantially no decomposition during processing of the fire additive composition and/or flame retardant thermoplastic composition. Substantially no decomposition is defined herein as amounts of decomposition that do not prevent the flame retardant additive composition from providing the desired level of fire retardancy. Exemplary metal hydroxides include, but are not limited to, magnesium hydroxide (for example, CAS Reg. No. 1309-42-8), aluminum hydroxide (for example, CAS Reg. No. 21645-51-2), cobalt hydroxide (for example, CAS Reg. No. 21041-93-0), and combinations thereof. In some embodiments, the metal hydroxide comprises magnesium hydroxide. In some embodiments the metal hydroxide has an average particle size less than or equal to 10 micrometers and/or a purity greater than or equal to 90 weight percent. In some embodiments it is desirable for the metal hydroxide to contain substantially no water, for example as evidenced by a weight loss of less than 1 weight percent upon drying at 120°C for 1 hour. In some embodiments the metal hydroxide can be coated, for example, with a fatty acid (e.g., stearic acid) or an aminosiloxane.

In some embodiments, the flame retardant comprises a bis(phenoxy)phosphazene. The bis(phenoxy)phosphazene can be oligomeric or polymeric, and it can be cyclic or linear. In some embodiments, the bis(phenoxy)phosphazene is cyclic and has the structure

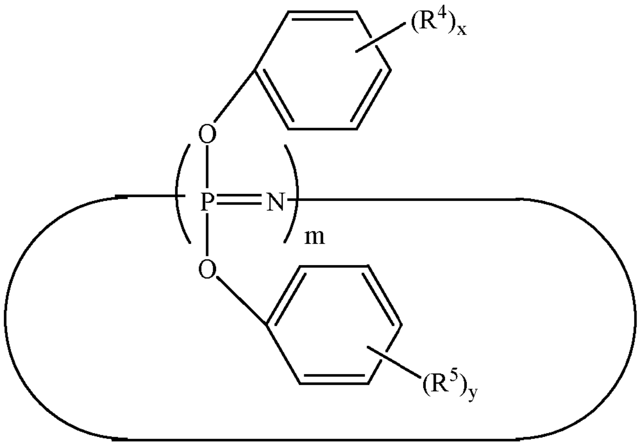

wherein m is an integer of 3 to 25; x and y are each independently 0, 1, 2, 3, 4, or 5; and each occurrence of $R^4$ and $R^5$ is halogen, $C_1$-$C_{12}$ alkyl, or $C_1$-$C_{12}$ alkoxyl.

In other embodiments, the bis(phenoxy)phosphazene is linear and has the structure

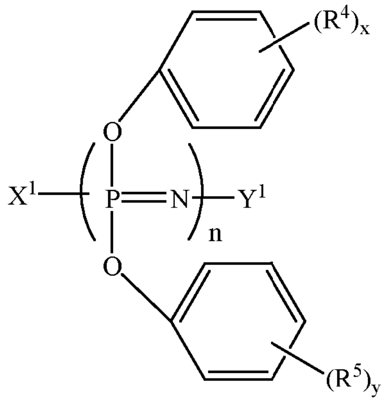

wherein n is an integer from 3 to 10,000; $X^1$ represents a -N=P(OPh)$_3$ group or a -N=P(O)(OPh) group wherein Ph represents a phenyl group; $Y^1$ represents a -P(OPh)$_4$ group or a -P(O)(OPh)$_2$ group; x and y are each independently 0, 1, 2, 3, 4, or 5; and each occurrence of $R^4$ and $R^5$ is halogen, $C_1$-$C_{12}$ alkyl, or $C_1$-$C_{12}$ alkoxyl.

In some embodiments, the flame retardant comprises a metal dialkylphosphinate, a melamine polyphosphate, and an organophosphate ester. In some embodiments, the flame retardant comprises aluminum tris(diethylphosphinate), melamine polyphosphate, and bisphenol A bis(diphenyl phosphate).

The composition comprises the flame retardant in an amount of 15 to 35 parts by weight, based on 100 parts by weight total of the poly(phenylene ether), the hydrogenated block copolymer, the polyolefin, and the flame retardant.

Within this range, the flame retardant amount can be 18 to 32 parts by weight, or 19 to 29 parts by weight. In some embodiments, the flame retardant comprises 10 to 35 weight percent of metal dialkylphosphinate (e.g., aluminum tris(diethylphosphinate)), 15 to 30 weight percent of melamine polyphosphate, and 35 to 65 weight percent of the organophosphate ester (e.g., bisphenol A bis(diphenyl phosphate)), based on the weight of the flame retardant.

In addition to the poly(phenylene ether), the hydrogenated block copolymer, the polyolefin, and the flame retardant, the composition comprises a hindered amine light stabilizer. The hindered amine light stabilizer has the structure

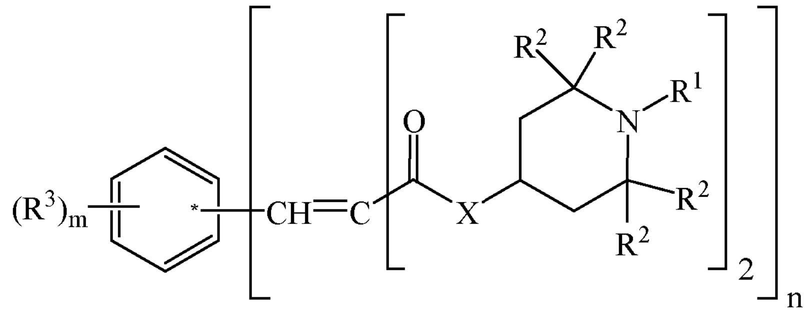

wherein $R^1$ and $R^2$ are independently at each occurrence hydrogen or $C_1$-$C_4$ alkyl; $R^3$ is independently at each occurrence hydroxyl, $C_1$-$C_6$ alkyl, or $C_1$-$C_6$ alkoxyl; X is independently at each occurrence -O- or -$NR^4$-, wherein $R^4$ is hydrogen or $C_1$-$C_6$ alkyl; n is 1, 2, or 3; and m is 0 to (6-n).

In some embodiments, $R^1$ and $R^2$ are methyl at each occurrence; $R^3$ is independently at each occurrence hydroxyl, methyl, or methoxyl; X is -O- at each occurrence; n is 1 or 2; and m is 0 or 1. In some embodiments, $R^1$ and $R^2$ are methyl at each occurrence; $R^3$ is methoxyl; X is -O- at each occurrence; n is 1; and m is 1.

The composition comprises the hindered amine light stabilizer in an amount of 0.2 to 5 parts by weight, based on 100 parts by weight total of the poly(phenylene ether), the hydrogenated block copolymer, the polyolefin, and the flame retardant. Within this range, the amount of the hindered amine light stabilizer can be 0.3 to 4 parts by weight, or 0.5 to 3 parts by weight.

The composition comprises zero to less than 0.5 part by weight of benzotriazole ultraviolet absorbing agents, based on based on 100 parts by weight total of the poly(phenylene ether), the hydrogenated block copolymer, the polyolefin, and the flame retardant. It has been observed that higher amounts of benzotriazole ultraviolet absorbing agents can cause staining of the composition when it is in proximity with metallic copper. In some embodiments, the composition excludes benzotriazole ultraviolet absorbing agents. Copper staining of the composition can also be observed when the composition comprises triazine ultraviolet absorbing agents. Staining is typically less with triazines than it is with benzotriazoles, when the two are compared on an equimolar basis. However, it may be desirable to minimize or exclude the use of triazine ultraviolet absorbing agents. Thus, in some embodiments, the composition comprises zero to less than 0.5 part by weight of triazine ultraviolet absorbing agents. In some embodiments, the composition excludes triazine ultraviolet absorbing agents.

The composition can, optionally, further comprise a poly(alkylene oxide). As used herein, the term "poly(alkylene oxide)" includes homopolymers of $C_2$-$C_4$ alkylene oxides (such as poly(ethylene oxide)s, poly(propylene oxide)s, poly(butylene oxide)s, and homopolymers of $C_2$-$C_4$ alkylene oxides initiated in the presence of a non-corresponding alcohol, such as pentaerythritol), random copolymers of $C_2$-$C_4$ alkylene oxides (such as random copolymers of ethylene oxide and propylene oxide), block copolymers of $C_2$-$C_4$ alkylene oxides (such as diblock and triblock copolymers of ethylene oxide and propylene oxide), mono($C_1$-$C_{12}$)ethers and di($C_1$-$C_{12}$)ethers of the foregoing (such as poly(ethylene oxide) dibutyl ether and poly(propylene oxide) monobutyl ether), mono($C_2$-$C_{12}$)esters and di($C_2$-$C_{12}$)esters of the foregoing (such as poly(ethylene oxide) diacetyl ester and poly(propylene oxide) monopropionyl ester), and combinations thereof. In some embodiments, the poly(alkylene oxide) excludes ester linkages.

In some embodiments, the poly(alkylene oxide) is selected from the group consisting of poly(ethylene oxide)s, poly(propylene oxide)s, random copolymers of ethylene oxide and propylene oxide, block copolymers of ethylene oxide and propylene oxide, monoalkyl ethers of the foregoing, dialkyl ethers of the foregoing, and combinations thereof. In a very specific embodiment, the poly(alkylene oxide) comprises a poly(propylene oxide) mono($C_1$-$C_{12}$-alkyl) ether.

In some embodiments, the poly(alkylene oxide) has a number average molecular weight of 300 to 40,000 grams/mole. Within this range, the number average molecular weight can be 300 to 25,000 grams/mole, specifically 500 to 5,000 grams/mole.

When the poly(alkylene oxide) is present in the composition, it can be used in an amount of 0.5 to 10 parts by weight, based on 100 parts by weight total of the poly(phenylene ether), the hydrogenated block copolymer, the polyolefin, and the flame retardant. Within this range, the poly(alkylene oxide) amount can be 1 to 6 parts by weight, or 1 to 4 parts by weight.

Another optional component of the composition is a cycloaliphatic epoxy resin. Cycloaliphatic epoxy resins are compounds that contain at least one cycloaliphatic group and at least one oxirane group. Some cycloaliphatic epoxy resins include at least one cycloaliphatic group and at least two oxirane rings per molecule. Specific examples of cycloaliphatic epoxy resins include 2-(3,4-epoxy)cyclohexyl-5,5-spiro-(3,4-epoxy)-cyclohexane-m-dioxane, 3,4-epoxycyclohexylmethyl-3,4-epoxycyclohexanecarboxylate, 3,4-epoxy-6-methylcyclohexylmethyl-3,4-epoxy-6-methylcyclohexanecarboxylate, vinyl cyclohexanedioxide, bis(3,4-epoxycyclohexylmethyl)adipate, bis(3,4-epoxy-6-methylcyclohexylmethyl)adipate, exo-exo bis(2,3-epoxycyclopentyl)ether, endo-exo bis(2,3-epoxycyclopentyl)ether, 2,2-bis(4-(2,3-epoxypropoxy) cyclohexyl)propane, 2,6-bis(2,3-epoxypropoxycyclohexyl p-dioxane), 2,6-bis(2,3-epoxypropoxy)norbornene, the diglycidylether of linoleic acid dimer, limonene dioxide, 2,2-bis(3,4-epoxycyclohexyl)propane, dicyclopentadiene dioxide, 1,2-epoxy-6-(2,3-epoxypropoxy)hexahydro-4,7-methanoindane, p-(2,3-epoxy)cyclopentylphenyl-2,3-epoxypropylether, 1-(2,3-epoxypropoxy)phenyl-5,6-epoxyhexahydro-4,7-methanoindane, o-(2,3-epoxy) cyclopentylphenyl-2,3-epoxypropyl ether), 1,2-bis[5-(1,2-epoxy)-4,7-hexahydromethanoindanoxyl]ethane, cyclopentenylphenyl glycidyl ether, cyclohexanediol diglycidyl ether, and diglycidyl hexahydrophthalate. In some embodiments, the cycloaliphatic epoxy resin comprises 3,4-epoxycyclohexylmethyl 3,4-epoxycyclohexanecarboxylate, 3,4-epoxy-6-methylcyclohexylmethyl 3,4-epoxy-6-methylcyclohexanecarboxylate, or a combination thereof. When present, the cycloaliphatic epoxy resin can be used in an amount of 0.1 to 4 parts by weight, based on 100 parts by weight total of the poly(phenylene ether), the hydrogenated block copolymer, the polyolefin, and the flame retardant. Within this range, the cycloaliphatic epoxy resin amount can be 0.2 to 2 parts by weight, specifically 0.3 to 1 part by weight.

The composition can, optionally, further comprise one or more additives known in the thermoplastics art. For example, the composition can, optionally, further comprise an additive chosen from stabilizers, mold release agents, lubricants, processing aids, drip retardants, dyes, pigments, antioxidants, anti-static agents, blowing agents, mineral oil, metal deactivators, and combinations thereof. When present, such additives are typically used in a total amount of less than or equal to 15 parts by weight, based on 100 parts by weight total of the poly(phenylene ether), the hydrogenated block copolymer, the polyolefin, and the flame retardant. Within this limit, the additive amount can be less than or equal to 12 parts by weight. Excluding white pigment, such additives are typically used in a total amount of less than or equal to 5 parts by weight, or less than or equal to 4 parts by weight, or less than or equal to 3 parts by weight, based on 100 parts by weight total of the poly(phenylene ether), the hydrogenated block copolymer, the polyolefin, and the flame retardant.

The composition is particularly useful when formulated to provide a light color, because light-colored poly(phenylene ether) compositions are most susceptible to color change on ultraviolet exposure. Thus, in some embodiments, the composition exhibits a lightness value, L*, of at least 60, or 60 to 95, or 70 to 90, or 75 to 90, measured according to ASTM D2244-15a using a D65 standard illuminant. In some embodiments, the composition exhibits a lightness value, L*, of at least 60, and a color change, Delta $E^*_{ab}$, less than or equal to 6, or 0 to 6, or 0 to 5, or 0 to 4, or 0 to 3, or 0 to 2, or 0 to 1, determined according to ASTM D4459-12 using a radiant exposure of 0.30 joules/meter$^2$ at 340 nanometers, and an exposure time of 300 hours.

The composition can, optionally, minimize or exclude polymers other than those described herein as required or optional. For example, in some embodiments the composition comprises 0 to 2 parts by weight, or 0 to 1 part by weight, or 0 part by weight, of homopolystyrenes, based on 100 parts by weight total of the poly(phenylene ether), the hydrogenated block copolymer, the polyolefin, and the flame retardant. As another example, in some embodiments the composition comprises 0 to 2 parts by weight, or 0 to 1 part by weight, or 0 part by weight, of rubber-modified polystyrenes, based on 100 parts by weight total of the poly(phenylene ether), the hydrogenated block copolymer, the polyolefin, and the flame retardant. As another example, in some embodiments the composition comprises 0 to 2 parts by weight, or 0 to 1 part by weight, or 0 part by weight, of polyamides, based on 100 parts by weight total of the poly(phenylene ether), the hydrogenated block copolymer, the polyolefin, and the flame retardant.

In a very specific embodiment of the composition, the poly(phenylene ether) is a poly(2,6-dimethyl-1,4-phenylene ether) having an intrinsic viscosity of 0.35 to 0.5 deciliter per gram; the hydrogenated block copolymer comprises 70 to 100 weight percent of a polystyrene-poly(ethylene-butylene-styrene)-polystyrene tapered block copolymer, based on the weight of the hydrogenated block copolymer; the polyolefin comprises 35 to 55 weight percent polypropylene, 30 to 50 weight percent polybutene, and 5 to 25 weight percent ethylene-propylene copolymer, based on the weight of the polyolefin; the flame retardant comprises 10 to 35 weight percent of a metal dialkylphosphinate, 15 to 30 weight percent of a melamine polyphosphate, and 35 to 65 weight percent of an organophosphate ester, based on the weight of the flame retardant; in the hindered amine light stabilizer structure, $R^1$ and $R^2$ are methyl at each occurrence, $R^3$ is independently at each occurrence hydroxyl or methyl or methoxyl, X is -O- at each occurrence, n is 1 or 2, and m is 0 or 1; and the composition comprises 17 to 33 parts by weight of the poly(phenylene ether), 25 to 41 parts by weight of the hydrogenated block copolymer, 12 to 26 parts by weight of the polyolefin, 18 to 32 parts by weight of the flame retardant, and 0.3 to 4 parts by weight of the hindered amine light stabilizer. Within this embodiment, the polystyrene-poly(ethylene-butylene-styrene)-polystyrene tapered block copolymer can have a polystyrene content of 35 to 45 weight percent, based on the weight of the tapered block copolymer, and a melt flow index of 3 to 15 grams per 10 minutes,

measured at 260 °C and 5 kilogram load according to ASTM D1238; the metal dialkylphosphinate can comprise aluminum tris(diethylphosphinate); the organophosphate ester can comprise bisphenol A bis(diphenyl phosphate); and m can be 1, n can be 1, and $R^3$ can be methoxyl.

The composition can be prepared by melt-blending or melt-kneading the components of the composition. The melt-blending or melt-kneading can be performed using common equipment such as ribbon blenders, HENSCHEL™ mixers, BANBURY™ mixers, drum tumblers, single-screw extruders, twin-screw extruders, multi-screw extruders, and co-kneaders. For example, the present composition can be prepared by melt-blending the components in a twin-screw extruder at a temperature of 230 to 260 °C, specifically 235 to 255 °C.

Another embodiment is an insulated conductor, comprising: a conductor; and an insulating covering disposed over the conductor; wherein the insulating covering comprises a composition comprising 15 to 35 parts by weight of a poly(phenylene ether); 23 to 43 parts by weight of a hydrogenated block copolymer of an alkenyl aromatic monomer and a conjugated diene; 10 to 30 parts by weight of a polyolefin; 15 to 35 parts by weight of a flame retardant; and 0.2 to 5 parts by weight of a hindered amine light stabilizer having the structure

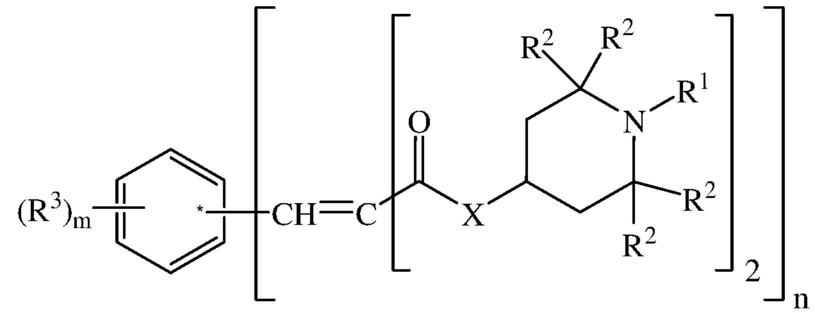

wherein $R^1$ and $R^2$ are independently at each occurrence hydrogen or $C_1$-$C_4$ alkyl; $R^3$ is independently at each occurrence hydroxyl, $C_1$-$C_6$ alkyl, or $C_1$-$C_6$ alkoxyl; X is independently at each occurrence -O- or -$NR^4$-, wherein $R^4$ is hydrogen or $C_1$-$C_6$ alkyl; n is 1, 2, or 3; and m is 0 to (6-n); wherein the composition comprises zero to less than 0.5 part by weight of benzotriazole ultraviolet absorbing agents; and wherein all parts by weight are based on 100 parts by weight total of the poly(phenylene ether), the hydrogenated block copolymer, the polyolefin, and the flame retardant. All of the above-described variations of the composition apply as well to the insulating covering of the insulating conductor.

Figure 1 is a side view of an insulated conductor 2 comprising conductor 4 and insulating covering 6 surrounding the conductor. Figure 2 is a cross-sectional view of the same conductor, with parts similarly labeled. The conductor 4 can be an electrical conductor (e.g., copper wire) or an optical conductor (e.g., glass fiber). The conductor can comprise multiple strands, as shown in Figure 1, or a single strand. The insulated conductor can be formed by extrusion coating the conductor with the insulating covering.

In a very specific embodiment of the insulated conductor, the poly(phenylene ether) is a poly(2,6-dimethyl-1,4-phenylene ether) having an intrinsic viscosity of 0.35 to 0.5 deciliter per gram; the hydrogenated block copolymer comprises 70 to 100 weight percent of a polystyrene-poly(ethylene-butylene-styrene)-polystyrene tapered block copolymer, based on the weight of the hydrogenated block copolymer; the polyolefin comprises 35 to 55 weight percent polypropylene, 30 to 50 weight percent polybutene, and 5 to 25 weight percent ethylene-propylene copolymer, based on the weight of the polyolefin; the flame retardant comprises 10 to 35 weight percent of a metal dialkylphosphinate, 15 to 30 weight percent of a melamine polyphosphate, and 35 to 65 weight percent of an organophosphate ester, based on the weight of the flame retardant; and in the hindered amine light stabilizer structure, $R^1$ and $R^2$ are methyl at each occurrence, $R^3$ is independently at each occurrence hydroxyl or methyl or methoxyl, X is -O- at each occurrence, n is 1 or 2, and m is 0 or 1; and wherein the composition comprises 17 to 33 parts by weight of the poly(phenylene ether), 25 to 41 parts by weight of the hydrogenated block copolymer, 12 to 26 parts by weight of the polyolefin, 18 to 32 parts by weight of the flame retardant, and 0.3 to 4 parts by weight of the hindered amine light stabilizer. Within this embodiment, the polystyrene-poly(ethylene-butylene-styrene)-polystyrene tapered block copolymer can have a polystyrene content of 35 to 45 weight percent, based on the weight of the tapered block copolymer, and a melt flow index of 3 to 15 grams per 10 minutes, measured at 260 °C and 5 kilogram load according to ASTM D1238; the metal dialkylphosphinate can comprise aluminum tris(diethylphosphinate); the organophosphate ester can comprise bisphenol A bis(diphenyl phosphate); and m can be 1, n can be 1, and $R^3$ can be methoxyl.

Another embodiment is a jacketed cable, comprising: a conductor; an insulating covering surrounding the conductor; and a jacket surrounding the insulation; wherein the jacket comprises a composition comprising 15 to 35 parts by weight of a poly(phenylene ether); 23 to 43 parts by weight of a hydrogenated block copolymer of an alkenyl aromatic monomer and a conjugated diene; 10 to 30 parts by weight of a polyolefin; 15 to 35 parts by weight of a flame retardant; and 0.2 to 5 parts by weight of a hindered amine light stabilizer having the structure

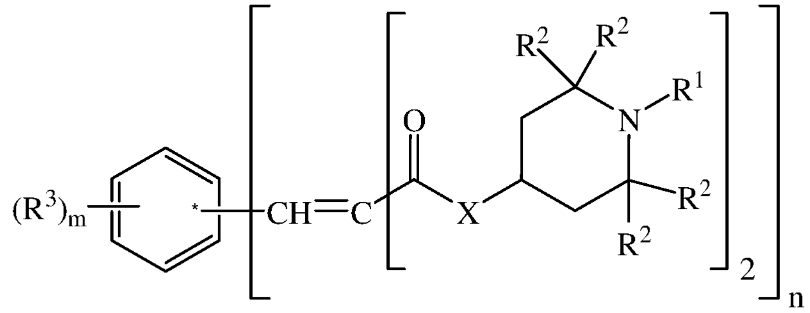

wherein $R^1$ and $R^2$ are independently at each occurrence hydrogen or $C_1$-$C_4$ alkyl; $R^3$ is independently at each occurrence hydroxyl, $C_1$-$C_6$ alkyl, or $C_1$-$C_6$ alkoxyl; X is independently at each occurrence -O- or -$NR^4$-, wherein $R^4$ is hydrogen or $C_1$-$C_6$ alkyl; n is 1, 2, or 3; and m is 0 to (6-n); wherein the composition comprises zero to less than 0.5 part by weight of benzotriazole ultraviolet absorbing agents; and wherein all parts by weight are based on 100 parts by weight total of the poly(phenylene ether), the hydrogenated block copolymer, the polyolefin, and the flame retardant. All of the above-described variants of the composition apply as well to the jacket composition of the jacketed cable. There is no particular limit on the composition of the insulating covering. In some embodiments, the insulating covering comprises the composition as described herein. In other embodiments, the insulating covering comprises a different flexible composition, such as one of those described in U.S. Patent Application Publication No. US 2006/0131052 A1 of Mhetar et al. In still other embodiments, the insulating covering 6 comprises a foamed thermoplastic composition.

A side view of a jacketed cable is presented in Figure 3, where cable 10 includes a conductor 4, an insulating covering 6 surrounding the conductor, and jacket 8 surrounding the insulating covering 6. A cross section of the cable is presented in Figure 4, where parts are similarly labeled. The jacketed cable can be formed by extrusion coating of the conductor, with either simultaneous or step-wise extrusion of the conductor with the covering and the jacket.

In a very specific embodiment of the jacketed cable, the poly(phenylene ether) is a poly(2,6-dimethyl-1,4-phenylene ether) having an intrinsic viscosity of 0.35 to 0.5 deciliter per gram; the hydrogenated block copolymer comprises 70 to 100 weight percent of a polystyrene-poly(ethylene-butylene-styrene)-polystyrene tapered block copolymer, based on the weight of the hydrogenated block copolymer; the polyolefin comprises 35 to 55 weight percent polypropylene, 30 to 50 weight percent polybutene, and 5 to 25 weight percent ethylene-propylene copolymer, based on the weight of the polyolefin; the flame retardant comprises 10 to 35 weight percent of a metal dialkylphosphinate, 15 to 30 weight percent of a melamine polyphosphate, and 35 to 65 weight percent of an organophosphate ester, based on the weight of the flame retardant; and in the hindered amine light stabilizer structure, $R^1$ and $R^2$ are methyl at each occurrence, $R^3$ is independently at each occurrence hydroxyl or methyl or methoxyl, X is -O- at each occurrence, n is 1 or 2, and m is 0 or 1, and the composition comprises 17 to 33 parts by weight of the poly(phenylene ether), 25 to 41 parts by weight of the hydrogenated block copolymer, 12 to 26 parts by weight of the polyolefin, 18 to 32 parts by weight of the flame retardant, and 0.3 to 4 parts by weight of the hindered amine light stabilizer. Within this embodiment, the polystyrene-poly(ethylene-butylene-styrene)-polystyrene tapered block copolymer can have a polystyrene content of 35 to 45 weight percent, based on the weight of the tapered block copolymer, and a melt flow index of 3 to 15 grams per 10 minutes, measured at 260 °C and 5 kilogram load according to ASTM D1238; the metal dialkylphosphinate can comprise aluminum tris(diethylphosphinate); the organophosphate ester can comprise bisphenol A bis(diphenyl phosphate); and m can be 1, n can be 1, and $R^3$ can be methoxyl.

Another embodiment is an injection molded article, comprising a composition comprising: 15 to 35 parts by weight of a poly(phenylene ether); 23 to 43 parts by weight of a hydrogenated block copolymer of an alkenyl aromatic monomer and a conjugated diene; 10 to 30 parts by weight of a polyolefin; 15 to 35 parts by weight of a flame retardant; and 0.2 to 5 parts by weight of a hindered amine light stabilizer having the structure

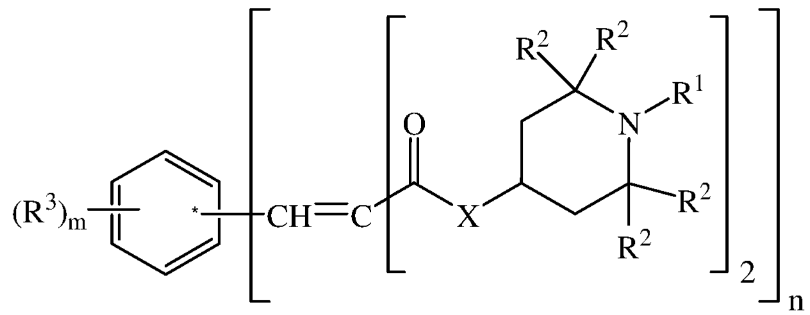

wherein $R^1$ and $R^2$ are independently at each occurrence hydrogen or $C_1$-$C_4$ alkyl; $R^3$ is independently at each occurrence hydroxyl, $C_1$-$C_6$ alkyl, or $C_1$-$C_6$ alkoxyl; X is independently at each occurrence -O- or -$NR^4$-, wherein $R^4$ is hydrogen or $C_1$-$C_6$ alkyl; n is 1, 2, or 3; and m is 0 to (6-n); wherein the composition comprises zero to less than 0.5 part by weight of benzotriazole ultraviolet absorbing agents; and wherein all parts by weight are based on 100 parts by weight total of the poly(phenylene ether), the hydrogenated block copolymer, the polyolefin, and the flame retardant. All of the above-described variants of the composition apply as well to the jacketed cable. Injection molding can be conducted at a barrel temperature of 230 to 260 °C, and a mold temperature of 20 to 80 °C. Detailed injection molding conditions can be found in the working examples below.

In some embodiments, the injection molded article is a cable connector. The cable connector can be a connector for a data cable, a power cable, or a combination thereof. Examples of cable connector types include DB9 male, DB9 female, DB15 male, DB15 female, DB25 male, DB25 female, Centronics C36 male, Centronics C50 male, Centronics C36 female, Ultra HD 0.8 millimeter Centronics 68 male, Mini Centronics 36 male, SC fiber optic, ST fiber optic, USB A male, USB A female, 3.5 millimeter audio male, 3.5 millimeter audio female, RCA audio male, .050 Style Micro DB50 male, .050 Style Micro DB50 female, .050 Style Micro DB68 male, .050 Style Micro DB68 female, Socket Style 50 position IDC male, Socket Style 50 position IDC female, Socket Style 40 position IDC female, Socket Style SCA Ultra Micro 80 female, RJ11 male, RJ11 female, RJ45 male, RJ45 female, DIN Style 5 pin male, DIN Style 5 pin female, DIN Style 6 pin male, DIN Style 6 pin female, DIN Style 8 pin male, DIN Style 8 pin female, Firewire Style 4 pin male, Firewire Style 6 pin male, power cord IEC320-C13, power cord IEC320-C14, power cord NEMA 1-15P male, power cord NEMA 5-15P male, power cord NEMA 5-15R female, power cord IEC320-C7 female. In some embodiments, the cable connector comprises a strain relief portion.

Figure 5 depicts a USB connector-terminated cable 20 comprising cable 22, strain relief 24, connector exterior 26, and connector interior 28. The strain relief 24 and connector exterior 26 are formed by injection molding the composition over the cable 22 and connector interior 28.

In a very specific embodiment of the injection molded article, the poly(phenylene ether) is a poly(2,6-dimethyl-1,4-phenylene ether) having an intrinsic viscosity of 0.35 to 0.5 deciliter per gram; the hydrogenated block copolymer comprises 70 to 100 weight percent of a polystyrene-poly(ethylene-butylene-styrene)-polystyrene tapered block copolymer, based on the weight of the hydrogenated block copolymer; the polyolefin comprises 35 to 55 weight percent polypropylene, 30 to 50 weight percent polybutene, and 5 to 25 weight percent ethylene-propylene copolymer, based on the weight of the polyolefin; the flame retardant comprises 10 to 35 weight percent of the metal dialkylphosphinate, 15 to 30 weight percent of the melamine polyphosphate, and 35 to 65 weight percent of the organophosphate ester, based on the weight of the flame retardant; and in the hindered amine light stabilizer structure, $R^1$ and $R^2$ are methyl at each occurrence, $R^3$ is independently at each occurrence hydroxyl or methyl or methoxyl, X is -O- at each occurrence, n is 1 or 2, and m is 0 or 1, and wherein the composition comprises 17 to 33 parts by weight of the poly(phenylene ether), 25 to 41 parts by weight of the hydrogenated block copolymer, 12 to 26 parts by weight of the polyolefin, 18 to 32 parts by weight of the flame retardant, and 0.3 to 4 parts by weight of the hindered amine light stabilizer.

All ranges disclosed herein are inclusive of the endpoints, and the endpoints are independently combinable with each other. Each range disclosed herein constitutes a disclosure of any point or sub-range lying within the disclosed range.

The invention is further illustrated by the following non-limiting examples.

EXAMPLES 1-8, COMPARATIVE EXAMPLES 1-7

Components used to form the compositions are summarized in Table 1.

Table 1

| Component | Description |
|---|---|
| PPE | Poly(2,6-dimethyl-1,4-phenylene ether), CAS 25134-01-4, having an intrinsic viscosity of 0.46 deciliter/gram; obtained as PPO™ 646 Resin from SABIC Innovative Plastics. |
| PPE-Si | A mixture of poly(2,6-dimethyl-1,4-phenylene ether) (CAS Reg. No. 24938-67-8) and poly(2,6-dimethyl-1,4-phenylene ether-polydimethylsiloxane block copolymer (CAS Reg. No. 1202019-56-4), the mixture having a polysiloxane content of about 5 weight percent and an intrinsic viscosity of about 0.40 deciliter per gram as measured in chloroform at 25°C; prepared according to the procedure of U.S. Patent No. 8,017,697 to Carrillo et al., Example 16. |

(continued)

| Component | Description |
|---|---|
| S(EB)S 1 | Polystyrene-poly(ethylene-butylene)-polystyrene triblock copolymer, CAS Reg. No. 66070-58-4, having a polystyrene content of about 30-33 weight percent and a negligible melt flow, measured at 260 °C and 5 kilogram load according to ASTM D1238; obtained as KRATON G1651 from Kraton Performance Polymers Inc. |
| S(EB)S 2 | Polystyrene-poly(ethylene-butylene)-polystyrene triblock copolymer, CAS Reg. No. 66070-58-4, having a polystyrene content of about 27.7-30.7 weight percent; obtained as KRATON™ G1650 from Kraton Performance Polymers Inc. |
| S(EBS)S 1 | Polystyrene-poly(ethylene-butylene-styrene)-polystyrene tapered triblock copolymer, having a polystyrene content of 37 to 44 weight percent and a melt flow index of 7 grams per 10 minutes, measured at 260 °C and 5 kilogram load according to ASTM D1238; obtained as KRATON™ A1536 HU Resin from Kraton Performance Polymers. |
| S(EBS)S 2 | Polystyrene-poly(ethylene-butylene-styrene)-polystyrene tapered triblock copolymer, having a polystyrene content of 56.3 to 60.3 weight percent and a melt flow index of less than 1 gram per 10 minutes, measured at 230 °C and 5 kilogram load according to ASTM D1238; obtained as KRATON™ A1535 HU Resin from Kraton Performance Polymers. |
| TPE | A melt-kneaded blend comprising about 35 weight percent polystyrene-poly(ethylene-butylene)-polystyrene triblock copolymer (CAS Reg. No. 66070-58-4), about 20 weight percent ethylene-propylene copolymer (CAS. Reg. No. 9010-79-1), and about 45 weight percent mineral oil (CAS Reg. No. 72623-83-7); obtained as Sumitomo TPE-SB 2400 from Sumitomo Chemical Co., Ltd. |
| POE 1 | Copolymer of ethylene and 1-octene, CAS Reg. No. 26221-73-8, having a melt flow rate of about 1.1 grams per 10 minutes, measured at 190 °C, and 2.16 kilogram load according to ISO 1133; obtained as QUEO 8201 from Borealis. |
| POE 2 | Copolymer of ethylene and 1-octene, CAS Reg. No. 26221-73-8, having a melt flow rate of about 10 grams per 10 minutes, measured at 190 °C and 2.16 kilogram load according to ISO 1133; obtained as QUEO™ 8210 from Borealis. |
| POE-g-MA | Maleic anhydride-grafted poly(ethylene-co-1-octene), having a melt flow rate of 1.6 grams per 10 minutes, measured at 190 °C and 2.16 kilogram load according to ASTM D1238; obtained as FUSABOND™ N493 from DuPont. |
| PP | Propylene homopolymer, CAS Reg. No. 9003-07-0, having a melt flow index of 8 grams per 10 minutes, measured at 230 °C and 2.16 kilogram load according to ASTM D1238; obtained as PP 570P Resin from SABIC. |
| PB | Polybutene, CAS Reg. No. 9003-29-6, having a kinematic viscosity of 100-125 centistokes at 100 °C; obtained as INDOPOL™ H-50 from INEOS. |
| Triazine UVA | 2-(4,6-Bis(2,4-dimethylphenyl)-1,3,5-triazin-2-yl)-5-(octyloxy)phenol, CAS Reg. No. 2725-22-6; obtained as CHIGUARD™ 1064 from Chitec. |
| Benzotriazole UVA 1 | 2,2'-Methylene bis[4-(1,1,3,3-tetramethylbutyl)-6-(2H-benzotriazole-2-yl)phenol], CAS Reg. No. 103597-45-1; obtained as TINUVIN™ 360 from BASF. |
| Benzotriazole UVA 2 | 2-(2-hydroxy-3,5-di-cumyl)benzotriazole, CAS Reg. No. 70321-86-7; obtained as TINUVIN™ 234 from BASF. |
| HALS 1 | Oligomeric hindered amine light stabilizer, CAS Reg. No. 152261-33-1, having a molecular weight of about 3,000 to 4,000 grams/mole; obtained as UVINUL™ 5050H from BASF. |
| HALS 2 | Bis(1,2,2,6,6-pentamethyl-4-piperidinyl)-2-(4-methoxybenzylidene)malonate, CAS Reg. No. 147783-69-5; obtained as HOSTAVIN™ PR-31 P from Clariant. |
| HALS 3 | 1,5,8,12-Tetrakis[4,6-bis(*N*-butyl-*N*-1,2,2,6,6-pentamethyl-4-piperidylamino)-1,3,5-triazin-2-yl]-1,5,8,12-tetraazadodecane, CAS Reg. No. 106990-43-6; obtained as LOWILITE™ 19 from SABO. |

(continued)

| Component | Description |
|---|---|
| CER | 3,4-Epoxycyclohexylmethyl 3,4-epoxycyclohexanecarboxylate, CAS Reg. No. 2386-87-0; obtained as CELLOXIDE™ 2021P from Daicel Corp. |
| PEO | Propylene oxide-initiated poly(ethylene oxide), having a number average molecular weight of about 600 grams/mole; obtained as POLYGLYKOL™ PR 600 from Clariant. |
| P(EO-PO) 1 | Poly(ethylene oxide-propylene oxide), having a number average molecular weight of about 11,400 grams/mole, and an ethylene oxide to propylene oxide weight ratio of 4:1; obtained as PLURONIC™ F88 from BASF. |
| P(EO-PO) 2 | Poly(ethylene oxide-propylene oxide) monobutyl ether, having a number average molecular weight of 1,600 and an ethylene oxide to propylene oxide weight ratio of 1:1; obtained as POLYGLYKOL™ B11/70 from Clariant. |
| PPO | Poly(propylene oxide) monobutyl ether, having a number average molecular weight of 1,100; obtained as POLYGLYKOL™ B01/40 from Clariant. |
| $Al(OP(O)Et_2)_3$ | Aluminum tris(diethylphosphinate), CAS Reg. No. 225789-38-8; obtained as EXOLIT™ OP1230 from Clariant. |
| MPP | Melamine polyphosphate, CAS Reg. No. 56386-64-2, obtained as BUDIT™ 3141 from Budenheim Iberica, S.A. |
| BPADP | Bisphenol A bis(diphenyl phosphate), CAS Reg. No. 5945-33-5; obtained as CR-741 from Daihachi Chemical. |
| $Mg(OH)_2$ | Magnesium dihydroxide, CAS Reg. No. 1309-42-8, surface treated with aminosiloxane; obtained as MAGNIFIN™ H-5IV from Albemarle. |
| AO 1 | Octadecyl-3-(3,5-di-tert-butyl-4-hydroxyphenyl) propionate, CAS Reg. No. 2082-79-3; obtained as IRGANOX™ 1076 from BASF. |
| AO 2 | Reaction products of phosphorus trichloride with 1,1'-biphenyl and 2,4-bis(1,1-dimethylethyl)phenol, CAS Reg. No. 119345-01-6; obtained as HOSTANOX™ P-EPQ™ from Clariant. |
| AO-MS | 2',3-bis[[3-[3,5-di-tert-butyl-4-hydroxyphenyl]propionyl]] propionohydrazide, CAS Reg. No. 32687-78-8, which functions as an antioxidant and metal scavenger; obtained as IRGANOX™ MD 1024 from BASF. |
| TBPP | Tris(2,4-di-tert-butylphenyl) phosphite, CAS Reg. No. 31570-04-4; obtained as IRGAFOS™ 168 from BASF Corp. |
| Erucamide | Erucamide, CAS Reg. No. 112-84-5; obtained as KEMAMIDE™ E Ultra from Crompton Corp. |
| Fragrance | Polyethylene-encapsulated fragrance; obtained as POLYIFF™ 7191-PBD from International Flavors and Fragrances Inc. |
| $TiO_2$ | Titanium dioxide, CAS Reg. No. 13463-67-7; obtained as TIOXIDE™ R-TC30 from Huntsman. |
| Pigment Red 101 | Pigment Red 101, CAS Reg. No. 1309-37-1; obtained as BAYFERROX™ 180M Pigment from Bayer. |
| Pigment Blue 29 | Pigment Blue 29, CAS Reg. No. 57455-37-5; obtained as Ultramarine 5085 from Holliday Pigments, a division of Huntsman. |

Compositions are summarized in Table 2, where component amounts are expressed in parts by weight, based on 100 parts by weight total of the poly(phenylene ether), the hydrogenated block copolymer (S(EBS)S 1 and S(EB)S content of TPE), the polyolefin (PP, PB, and EPR content of TPE), and the flame retardant ($Al(OP(O)Et_2)_3$, MPP, and BPADP).

Compositions were formed by melt mixing in a twin-screw extruder operating at zone temperatures from feed throat to die of 50 °C, 180 °C, 225 °C, 245 °C, 245 °C, 245 °C, 245 °C, 245 °C, 245 °C, 245 °C, 245 °C, and 255 °C. The extruder throughput was about 30 kilograms per hour. All components except BPADP were added at the feed throat. BPADP was added downstream via a liquid feeder. The extrudate was cooled and pelletized.

Prior to use for injection molding, pellets were dried for 4 hours at 80 °C. Molded parts for property testing were injection molded using zone temperatures from feed throat to die of 80 to 250 °C in zones 1-3, a nozzle temperature of 245 °C, a mold temperature of 40 °C, a screw rotation rate of 100 rotations per minute, a back pressure of 90 kilogram force per centimeter$^2$, a holding time of 10 seconds, a cooling time of 30 seconds, an injection speed of 100 millimeters/second, and a holding pressure of 600 kilogram force per centimeter$^2$. Injection molded color chips had dimensions of 90 millimeters by 50 millimeters by 3.2 millimeters.

For each composition, an insulated conductor was prepared by extrusion coating the composition onto a multistrand copper wire having a diameter of 0.511 millimeters. The resulting insulated conductor had an outer diameter of 2.0 millimeters.

Melt flow rate was determined according to ASTM D1238-13 at 250 °C and 5 kilogram load. Flexural modulus values, expressed in units of megapascals, were determined according to ASTM D790-15e1 at 23 °C using bar cross-sectional dimensions of 6.4 by 12.7 millimeters, and a test speed of 12.5 millimeters/minute. Shore A hardness values, which are unitless, were determined according to ASTM D2240-15 at 23 °C and a sample thickness of 6.4 millimeters. Tensile stress at break values, expressed in units of megapascals, and tensile elongation at break values, expressed in units of percent, were determined according to ASTM D638-14 at 23 °C using a Type I bar, a gage length of 50 millimeters, and a test speed of 50 millimeters/minute. The VW-1 flame retardancy test was conducted according to UL 1581.

CIELAB color parameters L*, a*, and b* were determined according to ASTM D2244-15a using a D65 standard illuminant. Ultraviolet aging was conducted according to ASTM D4459-12 using a radiant exposure of 36.5 watts/meter$^2$ at 300-400 nanometers, and an exposure time of 300 hours. Delta $E^*_{ab}$, which is a measure of color change, was calculated according to ASTM D2244-15a using the equation,

$$\text{Delta } E^*_{ab} = [(\Delta L^*)^2 + (\Delta a^*)^2 + (\Delta b^*)^2]^{1/2}.$$

In Table 2, "Delta E_Dark" is Delta $E^*_{ab}$, calculated as above, for a color chip after eight weeks storage in the dark at 23 °C and 50 percent humidity.

In Table 2, "Cu stain" is a measure of susceptibility to stain in the presence of metallic copper. In this test, a United States penny dated from 1962 to 1982 was clamped to a color chip molded from the experimental composition and placed in an oven at 60C with 90% relative humidity for 72 hours. The surface of the sample in contact with the penny was then checked for staining. Staining is rated on a scale of 1 to 5 (1 = no staining; 5 = very remarkable staining).

In Table 2, "Surface blooming" is a measure of UV absorber migration within the insulating covering of an insulated conductor prepared as described above. For each composition, a 30 meter length of an insulated conductor was placed in a sealed plastic bag for 2 months in the dark at 23 °C and 50 percent humidity, and then checked for UV absorber migration to the surface of the sample. Migration was characterized as "serious migration", "some migration", or "almost no migration". "Serious migration" (+) means that when a black cloth was used to swipe on the surface of the insulated conductor, there is remarkable white powder on the surface of the black cloth. "Some migration" (++) means that when a black cloth was used to swipe on the surface of the insulated conductor, there is moderate white powder on the surface of the black cloth. "Almost no migration" (+++) means that when a black cloth was used to swipe on the surface of the insulated conductor, no white powder could be seen on the black cloth.

Property results are summarized in Table 2. Comparative Examples 1 and 2, containing different benzotriazole UV absorbers, illustrate that Comparative Example 1 with Benzotriazole UVA 1 exhibits less color change on UV exposure than Comparative Example 2 with Benzotriazole UVA 1. Both Comparative Examples 1 and 2 exhibit poor performance with respect to copper staining and surface blooming. Comparative Example 3, which contains 0.5336 parts by weight of Benzotriazole UVA 2 and 1.0672 of HALS 1 (which is outside the scope of the claim 1 hindered amine light stabilizer) exhibits a high level of copper staining and a moderate level of surface blooming. Comparative Examples 4 and 5 exhibit 1.0672 and 2.1345 parts by weight, respectively, of Triazine UVA. The higher Triazine UVA is associated with better UV stability, but worse surface blooming. Comparative Example 6 contains 1.0672 parts by weight each of Triazine UVA and HALS 3 (which is outside the scope of the claim 1 hindered amine light stabilizer). Relative to Comparative Example 4 with the same Triazine UVA content but no HALS 3, Comparative Example 6 exhibits better UV stability but still exhibits moderate surface blooming. Comparative Example 7 contains 2.1345 parts by weight of HALS 3, exhibits good performance in the copper staining and surface blooming tests, but exhibits a moderate color change in the UV exposure test.

Examples 1-7 each include HALS 2, which is within the scope of the claim 1 hindered amine light stabilizer. Examples 1-3 contain 2.1345, 1.0672, and 0.5336 parts by weight, respectively, of HALS 2. All exhibit good UV resistance, resistance to copper staining, and resistance to surface blooming, with better UV resistance being associated with higher HALS 2 content. Examples 4-7 illustrate the effects of different poly(alkylene oxide)s at a low HALS 2 content of 0.5336 part by weight. In general, the addition of poly(alkylene oxide) improved UV resistance, without affecting good resistance

to copper staining and surface blooming. A comparison of Example 2 and Example 8 indicates that the use of a cycloaliphatic epoxy resin improves UV resistance.

Table 2

| | C. Ex. 1 | C. Ex. 2 | C. Ex. 3 | C. Ex. 4 | C. Ex. 5 |
|---|---|---|---|---|---|
| COMPOSITIONS | | | | | |
| PPE | 24.5464 | 24.5464 | 24.5464 | 24.5464 | 24.5464 |
| S(EBS)S 1 | 27.7481 | 27.7481 | 27.7481 | 27.7481 | 27.7481 |
| TPE | 14.9413 | 14.9413 | 14.9413 | 14.9413 | 14.9413 |
| PP | 8.5379 | 8.5379 | 8.5379 | 8.5379 | 8.5379 |
| PB | 7.4707 | 7.4707 | 7.4707 | 7.4707 | 7.4707 |
| $Al(OP(O)Et_2)_3$ | 5.3362 | 5.3362 | 5.3362 | 5.3362 | 5.3362 |
| MPP | 6.4034 | 6.4034 | 6.4034 | 6.4034 | 6.4034 |
| BPADP | 11.7396 | 11.7396 | 11.7396 | 11.7396 | 11.7396 |
| AO 1 | 0.8004 | 0.8004 | 0.8004 | 0.8004 | 0.8004 |
| AO 2 | 0.2668 | 0.2668 | 0.2668 | 0.2668 | 0.2668 |
| AO-MS | 0.1067 | 0.1067 | 0.1067 | 0.1067 | 0.1067 |
| Erucamide | 0.2134 | 0.2134 | 0.2134 | 0.2134 | 0.2134 |
| $TiO_2$ | 7.4707 | 7.4707 | 7.4707 | 7.4707 | 7.4707 |
| Pigment red | 0.0598 | 0.0598 | 0.0598 | 0.0598 | 0.0598 |
| Pigment blue | 0.1067 | 0.1067 | 0.1067 | 0.1067 | 0.1067 |
| CER | 0.5336 | 0.5336 | 0.5336 | 0.5336 | 0.5336 |
| Triazine UVA | 0.0000 | 0.0000 | 0.0000 | 1.0672 | 2.1345 |
| Benzotriazole UVA 1 | 1.0672 | 0.0000 | 0.0000 | 0.0000 | 0.0000 |

| | | | | | |
|---|---|---|---|---|---|
| Benzotriazole UVA 2 | 0.0000 | 1.0672 | 0.5336 | 0.0000 | 0.0000 |
| HALS 1 | 0.0000 | 0.0000 | 1.0672 | 0.0000 | 0.0000 |
| HALS 2 | 0.0000 | 0.0000 | 0.0000 | 0.0000 | 0.0000 |
| HALS 3 | 0.0000 | 0.0000 | 0.0000 | 0.0000 | 0.0000 |
| P(EO-PO) 1 | 0.0000 | 0.0000 | 0.0000 | 0.0000 | 0.0000 |
| PPO | 0.0000 | 0.0000 | 0.0000 | 0.0000 | 0.0000 |
| P(EO-PO) 2 | 0.0000 | 0.0000 | 0.0000 | 0.0000 | 0.0000 |
| PEO | 0.0000 | 0.0000 | 0.0000 | 0.0000 | 0.0000 |
| Fragrance | 0.0640 | 0.0640 | 0.0640 | 0.0640 | 0.0640 |
| PROPERTIES | | | | | |
| Melt flow rate (g/10 min) | 23.5 | 23.3 | 24.3 | 20.6 | 23.4 |
| Flex. mod. (MPa) | 63.9 | 58.1 | 63.2 | 66.9 | 65.8 |
| Shore A | 85.7 | 85.2 | 86 | 86.5 | 86.7 |
| Tensile stress at break (MPa) | 17.4 | 17.4 | 16.6 | -- | -- |
| Tensile elongation at break (%) | 195 | 203.2 | 201.8 | -- | -- |
| VW-1 | Pass | Pass | Pass | Pass | Pass |
| Delta $E^*_{ab}$_UV | 1.66 | 2.48 | 1.85 | 3.23 | 2.22 |
| Delta $E^*_{ab}$_Dark | -- | -- | -- | 0.226 | 1.133 |
| Cu stain | 5 | 5 | 5 | 2 | 2 |
| Surface blooming | + | + | ++ | ++ | + |

Table 2 (cont.)

| | C. Ex. 6 | C. Ex. 7 | Ex. 1 | Ex. 2 | Ex. 3 |
|---|---|---|---|---|---|
| COMPOSITIONS | | | | | |
| PPE | 24.5464 | 24.5464 | 24.5464 | 24.5464 | 24.5464 |
| S(EBS)S 1 | 27.7481 | 27.7481 | 27.7481 | 27.7481 | 27.7481 |
| TPE | 14.9413 | 14.9413 | 14.9413 | 14.9413 | 14.9413 |
| PP | 8.5379 | 8.5379 | 8.5379 | 8.5379 | 8.5379 |
| PB | 7.4707 | 7.4707 | 7.4707 | 7.4707 | 7.4707 |
| $Al(OP(O)Et_2)_3$ | 5.3362 | 5.3362 | 5.3362 | 5.3362 | 5.3362 |
| MPP | 6.4034 | 6.4034 | 6.4034 | 6.4034 | 6.4034 |
| BPADP | 11.7396 | 11.7396 | 11.7396 | 11.7396 | 11.7396 |
| AO 1 | 0.8004 | 0.8004 | 0.8004 | 0.8004 | 0.8004 |
| AO 2 | 0.2668 | 0.2668 | 0.2668 | 0.2668 | 0.2668 |
| AO-MS | 0.1067 | 0.1067 | 0.1067 | 0.1067 | 0.1067 |
| Erucamide | 0.2134 | 0.2134 | 0.2134 | 0.2134 | 0.2134 |
| $TiO_2$ | 7.4707 | 7.4707 | 7.4707 | 7.4707 | 7.4707 |
| Pigment red | 0.0598 | 0.0598 | 0.0598 | 0.0598 | 0.0598 |
| Pigment blue | 0.1067 | 0.1067 | 0.1067 | 0.1067 | 0.1067 |
| CER | 0.5336 | 0.5336 | 0.5336 | 0.5336 | 0.5336 |
| Triazine UVA | 1.0672 | 0.0000 | 0.0000 | 0.0000 | 0.0000 |
| Benzotriazole UVA 1 | 0.0000 | 0.0000 | 0.0000 | 0.0000 | 0.0000 |
| Benzotriazole UVA 2 | 0.0000 | 0.0000 | 0.0000 | 0.0000 | 0.0000 |
| HALS 1 | 0.0000 | 0.0000 | 0.0000 | 0.0000 | 0.0000 |
| HALS 2 | 0.0000 | 0.0000 | 2.1345 | 1.0672 | 0.5336 |
| HALS 3 | 1.0672 | 2.1345 | 0.0000 | 0.0000 | 0.0000 |
| P(EO-PO) 1 | 0.0000 | 0.0000 | 0.0000 | 0.0000 | 0.0000 |
| PPO | 0.0000 | 0.0000 | 0.0000 | 0.0000 | 0.0000 |
| P(EO-PO) 2 | 0.0000 | 0.0000 | 0.0000 | 0.0000 | 0.0000 |
| PEO | 0.0000 | 0.0000 | 0.0000 | 0.0000 | 0.0000 |
| Fragrance | 0.0640 | 0.0640 | 0.0640 | 0.0640 | 0.0640 |
| PROPERTIES | | | | | |

| | | | | | |
|---|---|---|---|---|---|
| Melt flow rate (g/10 min) | 21.3 | 19.7 | 22.4 | 20.3 | 17.5 |
| Flex. mod. (MPa) | 70.2 | 65.8 | 65.8 | 63.9 | -- |
| Shore A | 85.8 | 85.2 | 85.6 | 85.8 | 86.8 |
| Tensile stress at break (MPa) | -- | -- | 16.8 | 16.8 | 19.5 |
| Tensile elongation at break (%) | -- | -- | 200.8 | 197.6 | 251.2 |
| VW-1 | Pass | Pass | Pass | Pass | Pass |
| Delta $E^*_{ab}$_UV | 2.38 | 4.1 | 1.5 | 1.85 | 2.51 |
| Delta $E^*_{ab}$_Dark | -- | -- | -- | 0.153 | -- |
| Cu stain | 2 | 1 | 1 | 1 | 1 |
| Surface blooming | ++ | +++ | +++ | +++ | +++ |

Table 2 (cont.)

| | Ex. 4 | Ex. 5 | Ex. 6 | Ex. 7 | Ex. 8 |
|---|---|---|---|---|---|
| COMPOSITIONS | | | | | |
| PPE | 24.5464 | 24.5464 | 24.5464 | 24.5464 | 24.5464 |
| S(EBS)S 1 | 27.7481 | 27.7481 | 27.7481 | 27.7481 | 27.7481 |
| TPE | 14.9413 | 14.9413 | 14.9413 | 14.9413 | 14.9413 |
| PP | 8.5379 | 8.5379 | 8.5379 | 8.5379 | 8.5379 |
| PB | 7.4707 | 7.4707 | 7.4707 | 7.4707 | 7.4707 |
| $Al(OP(O)Et_2)_3$ | 5.3362 | 5.3362 | 5.3362 | 5.3362 | 5.3362 |
| MPP | 6.4034 | 6.4034 | 6.4034 | 6.4034 | 6.4034 |
| BPADP | 11.7396 | 11.7396 | 11.7396 | 11.7396 | 11.7396 |
| AO 1 | 0.8004 | 0.8004 | 0.8004 | 0.8004 | 0.8004 |
| AO 2 | 0.2668 | 0.2668 | 0.2668 | 0.2668 | 0.2668 |
| AO-MS | 0.1067 | 0.1067 | 0.1067 | 0.1067 | 0.1067 |
| Erucamide | 0.2134 | 0.2134 | 0.2134 | 0.2134 | 0.2134 |
| $TiO_2$ | 7.4707 | 7.4707 | 7.4707 | 7.4707 | 7.4707 |
| Pigment red | 0.0598 | 0.0598 | 0.0598 | 0.0598 | 0.0598 |
| Pigment blue | 0.1067 | 0.1067 | 0.1067 | 0.1067 | 0.1067 |
| CER | 0.5336 | 0.5336 | 0.5336 | 0.5336 | 0.0000 |
| Triazine UVA | 0.0000 | 0.0000 | 0.0000 | 0.0000 | 0.0000 |
| Benzotriazole UVA 1 | 0.0000 | 0.0000 | 0.0000 | 0.0000 | 0.0000 |
| Benzotriazole UVA 2 | 0.0000 | 0.0000 | 0.0000 | 0.0000 | 0.0000 |
| HALS 1 | 0.0000 | 0.0000 | 0.0000 | 0.0000 | 0.0000 |
| HALS 2 | 0.5336 | 0.5336 | 0.5336 | 0.5336 | 1.0672 |
| HALS 3 | 0.0000 | 0.0000 | 0.0000 | 0.0000 | 0.0000 |
| P(EO-PO) 1 | 2.1345 | 0.0000 | 0.0000 | 0.0000 | 0.0000 |
| PPO | 0.0000 | 2.1345 | 0.0000 | 0.0000 | 0.0000 |
| P(EO-PO) 2 | 0.0000 | 0.0000 | 2.1345 | 0.0000 | 0.0000 |
| PEO | 0.0000 | 0.0000 | 0.0000 | 2.1345 | 0.0000 |
| Fragrance | 0.0640 | 0.0640 | 0.0640 | 0.0640 | 0.0640 |
| PROPERTIES | | | | | |
| Melt flow rate (g/10 min) | 15.8 | 23.5 | 21.5 | 18.9 | 20.3 |
| Flex. mod. (MPa) | -- | -- | -- | -- | 63.9 |
| Shore A | 84 | 85.8 | 87.1 | 84.2 | 85.2 |
| Tensile stress at break (MPa) | 14.9 | 18.8 | 18.9 | 16 | 17.0 |
| Tensile elongation at break (%) | 251.6 | 290.6 | 275.8 | 229.2 | 199.2 |
| VW-1 | Pass | Pass | Pass | Pass | Pass |
| Delta $E^*_{ab}$_UV | 4.56 | 0.57 | 0.51 | 0.65 | 2.43 |
| Delta $E^*_{ab}$_Dark | -- | -- | -- | -- | -- |

| | | | | | |
|---|---|---|---|---|---|
| Cu stain | 1 | 1 | 1 | 1 | 1 |
| Surface blooming | +++ | +++ | +++ | +++ | +++ |

EXAMPLES 9-16, COMPARATIVE EXAMPLE 8

These prophetic examples further illustrate comparative and inventive compositions. Component amounts are expressed in parts by weight, based on 100 parts by weight total of the poly(phenylene ether), the hydrogenated block copolymer (S(EBS)S 1, S(EBS)S 2, and S(EB)S content of TPE), the polyolefin (PP, PB, and EPR content of TPE), and the flame retardant ($Al(OP(O)Et_2)_3$ and MPP).

Table 3

| | C. Ex. 8 | Ex. 9 | Ex. 10 | Ex. 11 | Ex. 12 |
|---|---|---|---|---|---|
| PPE | 27.086 | 27.086 | 27.086 | 27.086 | 27.086 |
| S(EBS)S 1 | 17.335 | 17.335 | 17.335 | 17.335 | 17.335 |
| TPE | 17.335 | 17.335 | 17.335 | 17.335 | 17.335 |
| S(EBS)S 2 | 13.001 | 13.001 | 13.001 | 13.001 | 13.001 |
| PP | 6.501 | 6.501 | 6.501 | 6.501 | 6.501 |
| PB | 8.126 | 8.126 | 8.126 | 8.126 | 8.126 |
| $Al(OP(O)Et_2)_3$ | 9.209 | 9.209 | 9.209 | 9.209 | 9.209 |
| MPP | 9.209 | 9.209 | 9.209 | 9.209 | 9.209 |
| Benzotriazole UVA 1 | 2.709 | 0.000 | 0.000 | 0.000 | 0.000 |
| CER | 0.542 | 0.542 | 0.542 | 0.542 | 0.542 |
| AO 2 | 0.271 | 0.271 | 0.271 | 0.271 | 0.271 |
| AO-MS | 0.108 | 0.108 | 0.108 | 0.108 | 0.108 |
| Erucamide | 0.433 | 0.433 | 0.433 | 0.433 | 0.433 |
| $TiO_2$ | 6.197 | 6.197 | 6.197 | 6.197 | 6.197 |
| Pigment Red 101 | 0.039 | 0.039 | 0.039 | 0.039 | 0.039 |
| Pigment Blue 29 | 0.056 | 0.056 | 0.056 | 0.056 | 0.056 |
| TBPP | 0.813 | 0.813 | 0.813 | 0.813 | 0.813 |
| Fragrance | 0.065 | 0.065 | 0.065 | 0.065 | 0.065 |
| HALS 2 | 0.000 | 1.083 | 2.167 | 1.083 | 1.083 |
| PPO | 0.000 | 0.000 | 0.000 | 1.083 | 2.167 |
| P(EO-PO) 2 | 0.000 | 0.000 | 0.000 | 0.000 | 0.000 |

Table 3 (cont.)

| | Ex. 13 | Ex. 14 | Ex. 15 | Ex. 16 |
|---|---|---|---|---|
| PPE | 27.086 | 27.086 | 27.086 | 27.086 |
| S(EBS)S 1 | 17.335 | 17.335 | 17.335 | 17.335 |
| TPE | 17.335 | 17.335 | 17.335 | 17.335 |
| S(EBS)S 2 | 13.001 | 13.001 | 13.001 | 13.001 |
| PP | 6.501 | 6.501 | 6.501 | 6.501 |
| PB | 8.126 | 8.126 | 8.126 | 8.126 |
| $Al(OP(O)Et_2)_3$ | 9.209 | 9.209 | 9.209 | 9.209 |
| MPP | 9.209 | 9.209 | 9.209 | 9.209 |
| Benzotriazole UVA 1 | 0.000 | 0.000 | 0.000 | 0.000 |
| CER | 0.542 | 0.542 | 0.542 | 0.542 |
| AO 2 | 0.271 | 0.271 | 0.271 | 0.271 |
| AO-MS | 0.108 | 0.108 | 0.108 | 0.108 |
| Erucamide | 0.433 | 0.433 | 0.433 | 0.433 |
| $TiO_2$ | 6.197 | 6.197 | 6.197 | 6.197 |
| Pigment Red 101 | 0.039 | 0.039 | 0.039 | 0.039 |

| | | | | |
|---|---|---|---|---|
| Pigment Blue 29 | 0.056 | 0.056 | 0.056 | 0.056 |
| TBPP | 0.813 | 0.813 | 0.813 | 0.813 |
| Fragrance | 0.065 | 0.065 | 0.065 | 0.065 |
| HALS 2 | 2.167 | 2.167 | 1.083 | 1.083 |
| PPO | 1.083 | 2.167 | 0.000 | 0.000 |
| P(EO-PO) 2 | 0.000 | 0.000 | 1.083 | 2.167 |

EXAMPLES 17-20, COMPARATIVE EXAMPLE 9

These prophetic examples further illustrate comparative and inventive compositions. Component amounts are expressed in parts by weight, based on 100 parts by weight total of the poly(phenylene ether) (PPE-Si), the hydrogenated block copolymer (S(EB)S 1, S(EB)S 2), the polyolefin (PP, PB, POE 1, POE 2, and POE-g-MA), and the flame retardant ($Mg(OH)_2$).

Table 4

| | C. Ex. 9 | Ex. 17 | Ex. 18 | Ex. 19 | Ex. 20 |
|---|---|---|---|---|---|
| PPE-Si | 23 | 23 | 23 | 23 | 23 |
| S(EB)S 1 | 6 | 6 | 6 | 6 | 6 |
| S(EB)S 2 | 6 | 6 | 6 | 6 | 6 |
| POE 1 | 7 | 7 | 7 | 7 | 7 |
| POE 2 | 12 | 12 | 12 | 12 | 12 |
| POE-g-MA | 5 | 5 | 5 | 5 | 5 |
| PB | 5 | 5 | 5 | 5 | 5 |
| PP | 3 | 3 | 3 | 3 | 3 |
| $Mg(OH)_2$ | 33 | 33 | 33 | 33 | 33 |
| Benzotriazole UVA 1 | 1 | 0 | 0 | 0 | 0 |
| AO 2 | 0.25 | 0.25 | 0.25 | 0.25 | 0.25 |
| Erucamide | 0.3 | 0.3 | 0.3 | 0.3 | 0.3 |
| TBPP | 0.75 | 0.75 | 0.75 | 0.75 | 0.75 |
| $TiO_2$ | 8 | 8 | 8 | 8 | 8 |
| Fragrance | 0.06 | 0.06 | 0.06 | 0.06 | 0.06 |
| HALS 2 | 0 | 1 | 2 | 1 | 1 |
| PPO | 0 | 0 | 0 | 1 | 2 |

## Claims

**1.** A composition, comprising:

15 to 35 parts by weight of a poly(phenylene ether);
23 to 43 parts by weight of a hydrogenated block copolymer of an alkenyl aromatic monomer and a conjugated diene;
10 to 30 parts by weight of a polyolefin;
15 to 35 parts by weight of a flame retardant; and
0.2 to 5 parts by weight of a hindered amine light stabilizer having the structure

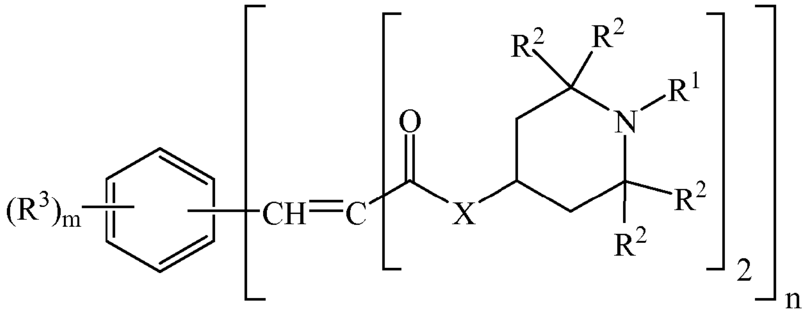

wherein

$R^1$ and $R^2$ are independently at each occurrence hydrogen or $C_1$-$C_4$ alkyl;
$R^3$ is independently at each occurrence hydroxyl, $C_1$-$C_6$ alkyl, or $C_1$-$C_6$ alkoxyl;
X is independently at each occurrence -O- or -$NR^4$-, wherein $R^4$ is hydrogen or $C_1$-$C_6$ alkyl;
n is 1, 2, or 3; and
m is 0 to (6-n);

wherein the composition comprises zero to less than 0.5 part by weight of benzotriazole ultraviolet absorbing agents; and
wherein all parts by weight are based on 100 parts by weight total of the poly(phenylene ether), the hydrogenated block copolymer, the polyolefin, and the flame retardant.

2. The composition of claim 1, wherein the poly(phenylene ether) is a poly(2,6-dimethyl-1,4-phenylene ether) having an intrinsic viscosity of 0.35 to 0.5 deciliter per gram measured by Ubbelohde viscometer at 25°C in chloroform; or wherein the poly(phenylene ether) has an intrinsic viscosity of 0.35 to 0.5 deciliter per gram measured by Ubbelohde viscometer at 25°C in chloroform and comprises poly(phenylene ether) homopolymer and poly(phenylene ether)-polysiloxane block copolymer.

3. The composition of any one of claims 1-2, wherein the hydrogenated block copolymer comprises 70 to 100 weight percent of a polystyrene-poly(ethylene-butylene-styrene)-polystyrene tapered block copolymer, based on the weight of the hydrogenated block copolymer.

4. The composition of any one of claims 1-3, wherein the polyolefin comprises 35 to 55 weight percent polypropylene, 30 to 50 weight percent polybutene, and 5 to 25 weight percent ethylene-propylene copolymer, based on the weight of the polyolefin.

5. The composition of any one of claims 1-4, wherein the flame retardant comprises 10 to 35 weight percent of a metal dialkylphosphinate, 15 to 30 weight percent of a melamine polyphosphate, and 35 to 65 weight percent of an organophosphate ester, based on the weight of the flame retardant.

6. The composition of any one of claims 1-5, wherein
$R^1$ and $R^2$ are methyl at each occurrence;
$R^3$ is independently at each occurrence hydroxyl, methyl, or methoxyl;
X is -O- at each occurrence;
n is 1 or 2; and
m is 0 or 1.

7. The composition of any one of claims 1-5,
$R^1$ and $R^2$ are methyl at each occurrence;
$R^3$ is methoxyl;
X is -O- at each occurrence;
n is 1; and
m is 1.

8. The composition of any one of claims 1-7, further comprising 0.5 to 10 parts by weight of a poly(alkylene oxide), preferably wherein the poly(alkylene oxide) comprises a poly(propylene oxide) mono($C_1$-$C_{12}$-alkyl) ether.

**9.** The composition of any one of claims 1-8, excluding benzotriazole ultraviolet absorbing agents, excluding triazine ultraviolet absorbing agents, or both.

**10.** The composition of claim 1,
wherein the poly(phenylene ether) is a poly(2,6-dimethyl-1,4-phenylene ether) having an intrinsic viscosity of 0.35 to 0.5 deciliter per gram;
wherein the hydrogenated block copolymer comprises 70 to 100 weight percent of a polystyrene-poly(ethylene-butylene-styrene)-polystyrene tapered block copolymer, based on the weight of the hydrogenated block copolymer;
wherein the polyolefin comprises 35 to 55 weight percent polypropylene, 30 to 50 weight percent polybutene, and 5 to 25 weight percent ethylene-propylene copolymer, based on the weight of the polyolefin;
wherein the flame retardant comprises 10 to 35 weight percent of a metal dialkylphosphinate, 15 to 30 weight percent of a melamine polyphosphate, and 35 to 65 weight percent of an organophosphate ester, based on the weight of the flame retardant;
wherein

$R^1$ and $R^2$ are methyl at each occurrence;
$R^3$ is independently at each occurrence hydroxyl, methyl, or methoxyl;
X is -O- at each occurrence;
n is 1 or 2; and
m is 0 or 1; and

wherein the composition comprises

17 to 33 parts by weight of the poly(phenylene ether),
25 to 41 parts by weight of the hydrogenated block copolymer,
12 to 26 parts by weight of the polyolefin,
18 to 32 parts by weight of the flame retardant, and
0.3 to 4 parts by weight of the hindered amine light stabilizer.

**11.** The composition of claim 10,
wherein the polystyrene-poly(ethylene-butylene-styrene)-polystyrene tapered block copolymer has a polystyrene content of 35 to 45 weight percent, based on the weight of the tapered block copolymer, and a melt flow index of 3 to 15 grams per 10 minutes, measured at 260 °C and 5 kilogram load according to ASTM D1238;
wherein the metal dialkylphosphinate comprises aluminum tris(diethylphosphinate); wherein the organophosphate ester comprises bisphenol A bis(diphenyl phosphate); and wherein m is 1, n is 1, and $R^3$ is methoxyl.

**12.** An insulated conductor, comprising:

a conductor; and
an insulating covering disposed over the conductor;
wherein the insulating covering comprises a composition comprising

15 to 35 parts by weight of a poly(phenylene ether);
23 to 43 parts by weight of a hydrogenated block copolymer of an alkenyl aromatic monomer and a conjugated diene;
10 to 30 parts by weight of a polyolefin;
15 to 35 parts by weight of a flame retardant; and
0.2 to 5 parts by weight of a hindered amine light stabilizer having the structure

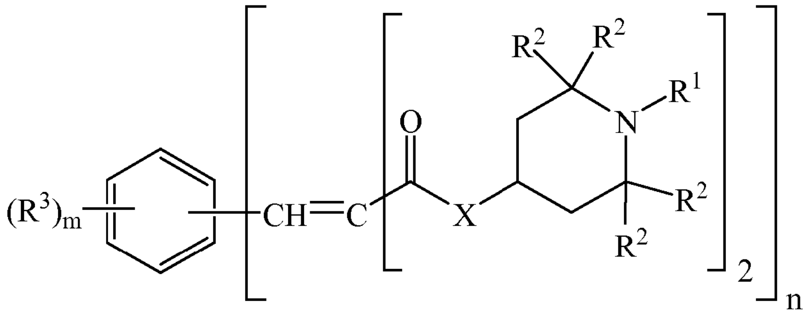

wherein

$R^1$ and $R^2$ are independently at each occurrence hydrogen or $C_1$-$C_4$ alkyl;
$R^3$ is independently at each occurrence hydroxyl, $C_1$-$C_6$ alkyl, or $C_1$-$C_6$ alkoxyl;
X is independently at each occurrence -O- or -$NR^4$-, wherein $R^4$ is hydrogen or $C_1$-$C_6$ alkyl;
n is 1, 2, or 3; and
m is 0 to (6-n);
wherein the composition comprises zero to less than 0.5 part by weight of benzotriazole ultraviolet absorbing agents; and
wherein all parts by weight are based on 100 parts by weight total of the poly(phenylene ether), the hydrogenated block copolymer, the polyolefin, and the flame retardant.

**13.** The insulated conductor of claim 12,
wherein the poly(phenylene ether) is a poly(2,6-dimethyl-1,4-phenylene ether) having an intrinsic viscosity of 0.35 to 0.5 deciliter per gram;
wherein the hydrogenated block copolymer comprises 70 to 100 weight percent of a polystyrene-poly(ethylene-butylene-styrene)-polystyrene tapered block copolymer, based on the weight of the hydrogenated block copolymer;
wherein the polyolefin comprises 35 to 55 weight percent polypropylene, 30 to 50 weight percent polybutene, and 5 to 25 weight percent ethylene-propylene copolymer, based on the weight of the polyolefin;
wherein the flame retardant comprises 10 to 35 weight percent of a metal dialkylphosphinate, 15 to 30 weight percent of a melamine polyphosphate, and 35 to 65 weight percent of an organophosphate ester, based on the weight of the flame retardant; and
wherein

$R^1$ and $R^2$ are methyl at each occurrence;
$R^3$ is independently at each occurrence hydroxyl, methyl, or methoxyl;
X is -O- at each occurrence;
n is 1 or 2; and
m is 0 or 1; and

wherein the composition comprises

17 to 33 parts by weight of the poly(phenylene ether),
25 to 41 parts by weight of the hydrogenated block copolymer,
12 to 26 parts by weight of the polyolefin,
18 to 32 parts by weight of the flame retardant, and
0.3 to 4 parts by weight of the hindered amine light stabilizer.

**14.** A jacketed cable, comprising:

a conductor;
an insulating covering surrounding the conductor; and
a jacket surrounding the insulation;
wherein the jacket comprises a composition comprising

15 to 35 parts by weight of a poly(phenylene ether);

23 to 43 parts by weight of a hydrogenated block copolymer of an alkenyl aromatic monomer and a conjugated diene;
10 to 30 parts by weight of a polyolefin;
15 to 35 parts by weight of a flame retardant; and
0.2 to 5 parts by weight of a hindered amine light stabilizer having the structure

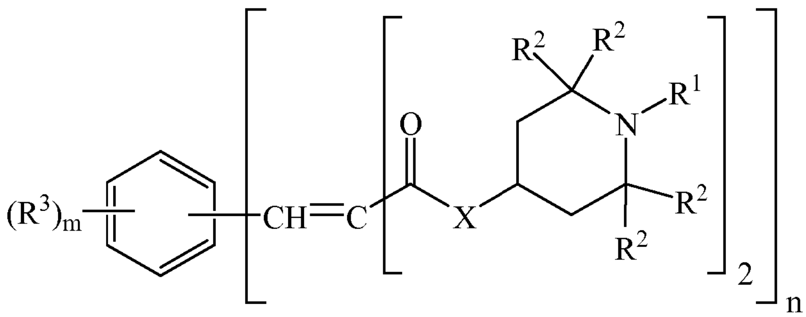

wherein

$R^1$ and $R^2$ are independently at each occurrence hydrogen or $C_1$-$C_4$ alkyl;
$R^3$ is independently at each occurrence hydroxyl, $C_1$-$C_6$ alkyl, or $C_1$-$C_6$ alkoxyl;
X is independently at each occurrence -O- or -$NR^4$-, wherein $R^4$ is hydrogen or $C_1$-$C_6$ alkyl;
n is 1, 2, or 3; and
m is 0 to (6-n);
wherein the composition comprises zero to less than 0.5 part by weight of benzotriazole ultraviolet absorbing agents; and
wherein all parts by weight are based on 100 parts by weight total of the poly(phenylene ether), the hydrogenated block copolymer, the polyolefin, and the flame retardant.

**15.** The jacketed cable of claim 14,
wherein the poly(phenylene ether) is a poly(2,6-dimethyl-1,4-phenylene ether) having an intrinsic viscosity of 0.35 to 0.5 deciliter per gram;
wherein the hydrogenated block copolymer comprises 70 to 100 weight percent of a polystyrene-poly(ethylene-butylene-styrene)-polystyrene tapered block copolymer, based on the weight of the hydrogenated block copolymer;
wherein the polyolefin comprises 35 to 55 weight percent polypropylene, 30 to 50 weight percent polybutene, and 5 to 25 weight percent ethylene-propylene copolymer, based on the weight of the polyolefin;
wherein the flame retardant comprises 10 to 35 weight percent of a metal dialkylphosphinate, 15 to 30 weight percent of a melamine polyphosphate, and 35 to 65 weight percent of an organophosphate ester, based on the weight of the flame retardant; and
wherein
$R^1$ and $R^2$ are methyl at each occurrence;
$R^3$ is independently at each occurrence hydroxyl, methyl, or methoxyl; X is -O- at each occurrence;
n is 1 or 2; and
m is 0 or 1; and
wherein the composition comprises

17 to 33 parts by weight of the poly(phenylene ether),
25 to 41 parts by weight of the hydrogenated block copolymer,
12 to 26 parts by weight of the polyolefin,
18 to 32 parts by weight of the flame retardant, and
0.3 to 4 parts by weight of the hindered amine light stabilizer.

## Patentansprüche

**1.** Zusammensetzung, umfassend:

15 bis 35 Gewichtsteile eines Poly(phenylenethers);
23 bis 43 Gewichtsteile eines hydrierten Block-Copolymers eines alkenylaromatischen Monomers und eines konjugierten Diens;
10 bis 30 Gewichtsteile eines Polyolefins;
15 bis 35 Gewichtsteile eines Flammschutzmittels; und
0,2 bis 5 Gewichtsteile eines gehinderten Amin-Lichtstabilisators mit der Struktur

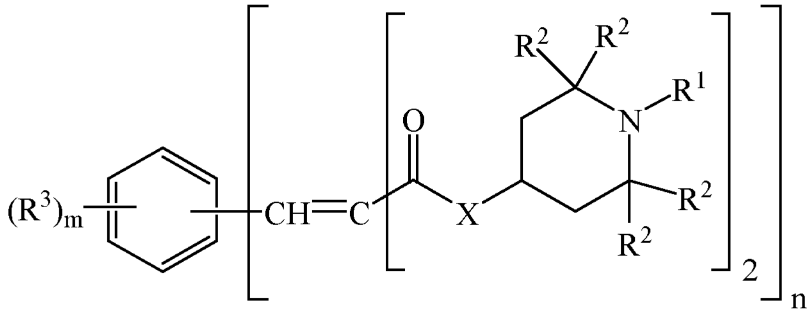

wobei

$R^1$ und $R^2$ bei jedem Auftreten unabhängig voneinander Wasserstoff oder $C_1$-$C_4$-Alkyl sind;
$R^3$ bei jedem Auftreten unabhängig Hydroxyl, $C_1$-$C_6$-Alkyl oder $C_1$-$C_6$-Alkoxyl ist;
X bei jedem Auftreten unabhängig -O- oder -$NR^4$- ist, wobei $R^4$ Wasserstoff oder $C_1$-$C_6$-Alkyl ist;
n 1, 2 oder 3 ist; und
m 0 bis (6-n) ist;

wobei die Zusammensetzung Null bis weniger als 0,5 Gewichtsteile Benzotriazol-Ultraviolett-Absorptionsmittel umfasst; und
wobei alle Gewichtsteile auf insgesamt 100 Gewichtsteile des Poly(phenylenethers), des hydrierten Block-Copolymers, des Polyolefins und des Flammschutzmittels bezogen sind.

**2.** Zusammensetzung nach Anspruch 1, wobei der Poly(phenylenether) ein Poly(2,6-dimethyl-1,4-phenylenether) mit einer intrinsischen Viskosität bzw. Grenzviskosität von 0,35 bis 0,5 Deziliter pro Gramm ist, gemessen mit einem Ubbelohde-Viskosimeter bei 25 °C in Chloroform; oder wobei der Poly(phenylenether) eine intrinsische Viskosität bzw. Grenzviskosität von 0,35 bis 0,5 Deziliter pro Gramm, gemessen mit einem Ubbelohde-Viskosimeter bei 25 °C in Chloroform, aufweist und Poly(phenylenether)-Homopolymer und Poly(phenylenether)-Polysiloxan-Block-Copolymer umfasst.

**3.** Zusammensetzung nach irgendeinem der Ansprüche 1 bis 2, wobei das hydrierte Block-Copolymer 70 bis 100 Gewichtsprozent eines Polystyrol-Poly(ethylen-butylen-styrol)-Polystyrol-Block-Copolymers mit sich zu den Endblöcken hin ändernder Zusammensetzung *(tapered)* umfasst, bezogen auf das Gewicht des hydrierten Block-Copolymers.

**4.** Zusammensetzung nach irgendeinem der Ansprüche 1 bis 3, wobei das Polyolefin 35 bis 55 Gewichtsprozent Polypropylen, 30 bis 50 Gewichtsprozent Polybuten und 5 bis 25 Gewichtsprozent Ethylen-Propylen-Copolymer, bezogen auf das Gewicht des Polyolefins, umfasst.

**5.** Zusammensetzung nach irgendeinem der Ansprüche 1 bis 4, wobei das Flammschutzmittel 10 bis 35 Gewichtsprozent eines Metalldialkylphosphinats, 15 bis 30 Gewichtsprozent eines Melaminpolyphosphats und 35 bis 65 Gewichtsprozent eines Organophosphatesters, bezogen auf das Gewicht des Flammschutzmittels, umfasst.

**6.** Zusammensetzung nach irgendeinem der Ansprüche 1 bis 5, wobei
$R^1$ und $R^2$ bei jedem Auftreten Methyl sind;
$R^3$ bei jedem Auftreten unabhängig Hydroxyl, Methyl oder Methoxyl ist;
X bei jedem Auftreten -O- ist;
n 1 oder 2 ist; und
m 0 oder 1 ist.

7. Zusammensetzung nach irgendeinem der Ansprüche 1 bis 5, wobei
$R^1$ und $R^2$ bei jedem Auftreten Methyl sind;
$R^3$ Methoxyl ist;
X bei jedem Auftreten -O- ist;
n 1 ist; und
m 1 ist.

8. Zusammensetzung nach irgendeinem der Ansprüche 1 bis 7, ferner umfassend 0,5 bis 10 Gewichtsteile eines Poly(alkylenoxids), bevorzugt wobei das Poly(alkylenoxid) einen Poly(propylenoxid)mono($C_1$-$C_{12}$-alkyl)ether umfasst.

9. Zusammensetzung nach irgendeinem der Ansprüche 1 bis 8, ausgenommen Benzotriazol-Ultraviolett-Absorptionsmittel, ausgenommen Triazin-Ultraviolett-Absorptionsmittel, oder beide.

10. Zusammensetzung nach Anspruch 1,
wobei der Poly(phenylenether) ein Poly(2,6-dimethyl-1,4-phenylenether) mit einer intrinsischen Viskosität bzw. Grenzviskosität von 0,35 bis 0,5 Deziliter pro Gramm ist; wobei das hydrierte Block-Copolymer 70 bis 100 Gewichtsprozent eines Polystyrol-Poly(ethylen-butylen-styrol)-Polystyrol-Block-Copolymers mit sich zu den Endblöcken hin ändernder Zusammensetzung *(tapered),* bezogen auf das Gewicht des hydrierten Block-Copolymers, umfasst;
wobei das Polyolefin 35 bis 55 Gewichtsprozent Polypropylen, 30 bis 50 Gewichtsprozent Polybuten und 5 bis 25 Gewichtsprozent Ethylen-Propylen-Copolymer umfasst, bezogen auf das Gewicht des Polyolefins;
wobei das Flammschutzmittel 10 bis 35 Gewichtsprozent eines Metalldialkylphosphinats, 15 bis 30 Gewichtsprozent eines Melaminpolyphosphats und 35 bis 65 Gewichtsprozent eines Organophosphatesters, bezogen auf das Gewicht des Flammschutzmittels, umfasst;
wobei

$R^1$ und $R^2$ bei jedem Auftreten Methyl sind;
$R^3$ bei jedem Auftreten unabhängig Hydroxyl, Methyl oder Methoxyl ist;
X bei jedem Auftreten -O- ist;
n 1 oder 2 ist; und
m 0 oder 1 ist; und

wobei die Zusammensetzung

17 bis 33 Gewichtsteile des Poly(phenylenethers),
25 bis 41 Gewichtsteile des hydrierten Block-Copolymers,
12 bis 26 Gewichtsteile des Polyolefins,
18 bis 32 Gewichtsteile des Flammschutzmittels und
0,3 bis 4 Gewichtsteile des gehinderten Amin-Lichtstabilisators umfasst.

11. Zusammensetzung nach Anspruch 10, wobei das Polystyrol-Poly(ethylen-butylen-styrol)-Polystyrol-Block-Copolymer mit sich zu den Endblöcken hin ändernder Zusammensetzung *(tapered)* einen Polystyrolgehalt von 35 bis 45 Gewichtsprozent, bezogen auf das Gewicht des Block-Copolymers mit sich zu den Endblöcken hin ändernder Zusammensetzung *(tapered),* und einen Schmelzflussindex von 3 bis 15 Gramm pro 10 Minuten, gemessen bei 260 °C und 5 kg Last gemäß ASTM D1238, aufweist;
wobei das Metalldialkylphosphinat Aluminiumtris(diethylphosphinat) umfasst;
wobei der Organophosphatester Bisphenol A-bis(diphenylphosphat) umfasst; und
wobei m 1 ist, n 1 ist und $R^3$ Methoxyl ist.

12. Isolierter Leiter, umfassend:

einen Leiter; und
eine isolierende Abdeckung, die über dem Leiter angeordnet ist;
wobei die isolierende Abdeckung eine Zusammensetzung umfasst, die
15 bis 35 Gewichtsteile eines Poly(phenylenethers);
23 bis 43 Gewichtsteile eines hydrierten Block-Copolymers eines alkenylaromatischen Monomers und eines konjugierten Diens;
10 bis 30 Gewichtsteile eines Polyolefins;

15 bis 35 Gewichtsteile eines Flammschutzmittels; und
0,2 bis 5 Gewichtsteile eines gehinderten Amin-Lichtstabilisators mit der Struktur

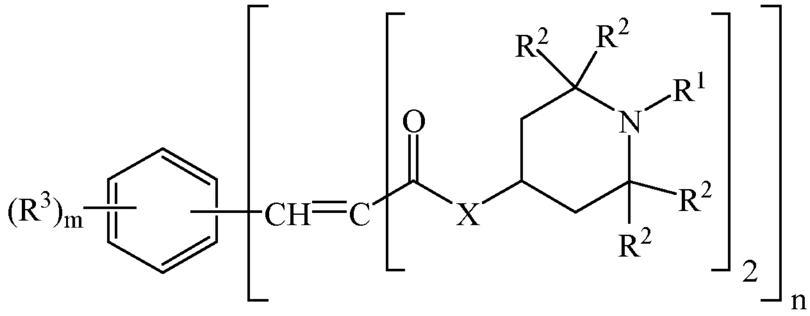

umfasst, wobei

$R^1$ und $R^2$ bei jedem Auftreten unabhängig voneinander Wasserstoff oder $C_1$-$C_4$-Alkyl sind;
$R^3$ bei jedem Auftreten unabhängig Hydroxyl, $C_1$-$C_6$-Alkyl oder $C_1$-$C_6$-Alkoxyl ist;
X bei jedem Auftreten unabhängig -O- oder -$NR^4$- ist, wobei $R^4$ Wasserstoff oder $C_1$-$C_6$-Alkyl ist;
n 1, 2 oder 3 ist; und
m 0 bis (6-n) ist;

wobei die Zusammensetzung Null bis weniger als 0,5 Gewichtsteile Benzotriazol-Ultraviolett-Absorptionsmittel umfasst; und
wobei alle Gewichtsteile auf insgesamt 100 Gewichtsteile des Poly(phenylenethers), des hydrierten Block-Copolymers, des Polyolefins und des Flammschutzmittels bezogen sind.

**13.** Isolierter Leiter nach Anspruch 12,
wobei der Poly(phenylenether) ein Poly(2,6-dimethyl-1,4-phenylenether) mit einer intrinsischen Viskosität bzw. Grenzviskosität von 0,35 bis 0,5 Deziliter pro Gramm ist; wobei das hydrierte Block-Copolymer 70 bis 100 Gewichtsprozent eines Polystyrol-Poly(ethylen-butylen-styrol)-Polystyrol-Block-Copolymers mit sich zu den Endblöcken hin ändernder Zusammensetzung *(tapered),* bezogen auf das Gewicht des hydrierten Block-Copolymers, umfasst;
wobei das Polyolefin 35 bis 55 Gewichtsprozent Polypropylen, 30 bis 50 Gewichtsprozent Polybuten und 5 bis 25 Gewichtsprozent Ethylen-Propylen-Copolymer umfasst, bezogen auf das Gewicht des Polyolefins;
wobei das Flammschutzmittel 10 bis 35 Gewichtsprozent eines Metalldialkylphosphinats, 15 bis 30 Gewichtsprozent eines Melaminpolyphosphats und 35 bis 65 Gewichtsprozent eines Organophosphatesters, bezogen auf das Gewicht des Flammschutzmittels, umfasst; und wobei

$R^1$ und $R^2$ bei jedem Auftreten Methyl sind;
$R^3$ bei jedem Auftreten unabhängig Hydroxyl, Methyl oder Methoxyl ist;
X bei jedem Auftreten -O- ist;
n 1 oder 2 ist; und
m 0 oder 1 ist; und

wobei die Zusammensetzung

17 bis 33 Gewichtsteile des Poly(phenylenethers),
25 bis 41 Gewichtsteile des hydrierten Block-Copolymers,
12 bis 26 Gewichtsteile des Polyolefins,
18 bis 32 Gewichtsteile des Flammschutzmittels und
0,3 bis 4 Gewichtsteile des gehinderten Amin-Lichtstabilisators umfasst.

**14.** Ummanteltes Kabel, umfassend:

einen Leiter;
eine den Leiter umgebende isolierende Abdeckung; und
einen Mantel, der die Isolierung umgibt;

wobei der Mantel eine Zusammensetzung umfasst, die
15 bis 35 Gewichtsteile eines Poly(phenylenethers);
23 bis 43 Gewichtsteile eines hydrierten Block-Copolymers eines alkenylaromatischen Monomers und eines konjugierten Diens;
10 bis 30 Gewichtsteile eines Polyolefins;
15 bis 35 Gewichtsteile eines Flammschutzmittels; und
0,2 bis 5 Gewichtsteile eines gehinderten Amin-Lichtstabilisators mit der Struktur

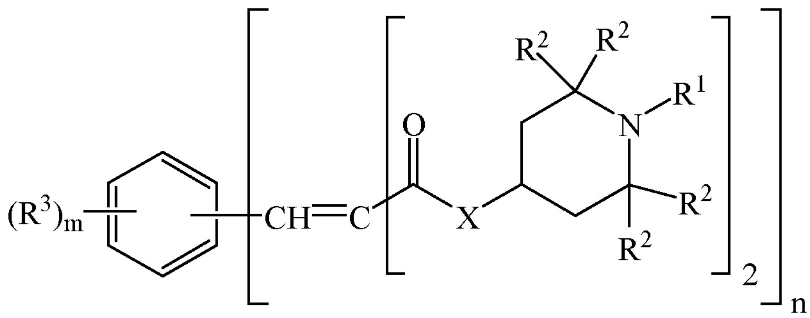

umfasst, wobei

$R^1$ und $R^2$ bei jedem Auftreten unabhängig voneinander Wasserstoff oder $C_1$-$C_4$-Alkyl sind;
$R^3$ bei jedem Auftreten unabhängig Hydroxyl, $C_1$-$C_6$-Alkyl oder $C_1$-$C_6$-Alkoxyl ist;
X bei jedem Auftreten unabhängig -O- oder -$NR^4$- ist, wobei $R^4$ Wasserstoff oder $C_1$-$C_6$-Alkyl ist;
n 1, 2 oder 3 ist; und
m 0 bis (6-n) ist;

wobei die Zusammensetzung Null bis weniger als 0,5 Gewichtsteile Benzotriazol-Ultraviolett-Absorptionsmittel umfasst; und
wobei alle Gewichtsteile auf insgesamt 100 Gewichtsteile des Poly(phenylenethers), des hydrierten Block-Copolymers, des Polyolefins und des Flammschutzmittels bezogen sind.

**15.** Ummanteltes Kabel nach Anspruch 14,
wobei der Poly(phenylenether) ein Poly(2,6-dimethyl-1,4-phenylenether) mit einer intrinsischen Viskosität bzw. Grenzviskosität von 0,35 bis 0,5 Deziliter pro Gramm ist; wobei das hydrierte Block-Copolymer 70 bis 100 Gewichtsprozent eines Polystyrol-Poly(ethylen-butylen-styrol)-Polystyrol-Block-Copolymers mit sich zu den Endblöcken hin ändernder Zusammensetzung *(tapered),* bezogen auf das Gewicht des hydrierten Block-Copolymers, umfasst;
wobei das Polyolefin 35 bis 55 Gewichtsprozent Polypropylen, 30 bis 50 Gewichtsprozent Polybuten und 5 bis 25 Gewichtsprozent Ethylen-Propylen-Copolymer umfasst, bezogen auf das Gewicht des Polyolefins;
wobei das Flammschutzmittel 10 bis 35 Gewichtsprozent eines Metalldialkylphosphinats, 15 bis 30 Gewichtsprozent eines Melaminpolyphosphats und 35 bis 65 Gewichtsprozent eines Organophosphatesters, bezogen auf das Gewicht des Flammschutzmittels, umfasst; und wobei

$R^1$ und $R^2$ bei jedem Auftreten Methyl sind;
$R^3$ bei jedem Auftreten unabhängig Hydroxyl, Methyl oder Methoxyl ist;
X bei jedem Auftreten -O- ist;
n 1 oder 2 ist; und
m 0 oder 1 ist; und

wobei die Zusammensetzung

17 bis 33 Gewichtsteile des Poly(phenylenethers),
25 bis 41 Gewichtsteile des hydrierten Block-Copolymers,
12 bis 26 Gewichtsteile des Polyolefins,
18 bis 32 Gewichtsteile des Flammschutzmittels und
0,3 bis 4 Gewichtsteile des gehinderten Amin-Lichtstabilisators umfasst.

## Revendications

1. Composition, comprenant :

 15 à 35 parties en poids d'un poly(phénylène éther) ;
 23 à 43 parties en poids d'un copolymère à blocs hydrogénés d'un monomère alcénylaromatique et d'un diène conjugué ;
 10 à 30 parties en poids d'une polyoléfine ;
 15 à 35 parties en poids d'un retardateur de flamme ; et 0,2 à 5 parties en poids d'un photostabilisant de type amine à empêchement stérique ayant la structure

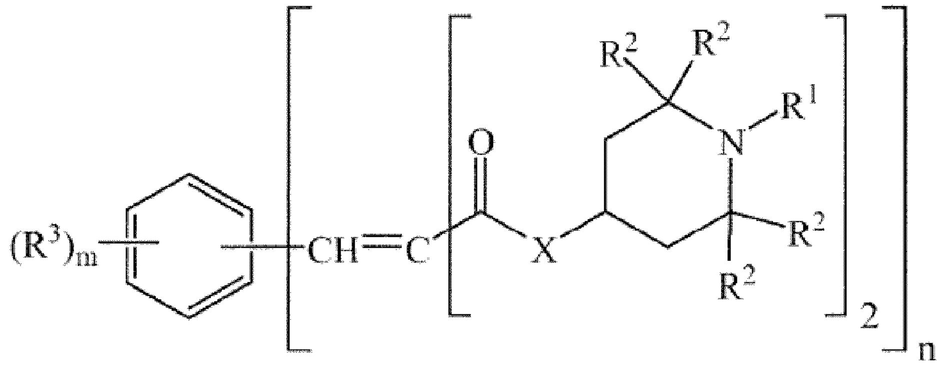

 dans laquelle

 $R^1$ et $R^2$ représentent indépendamment à chaque occurrence un hydrogène ou un alkyle en $C_1$-$C_4$ ;
 $R^3$ représente indépendamment à chaque occurrence un hydroxyle, un alkyle en $C_1$-$C_6$ ou un alcoxyle en $C_1$-$C_6$ ;
 X représente indépendamment à chaque occurrence -O- ou -$NR^4$-, où $R^4$ est un hydrogène ou un alkyle en $C_1$-$C_6$ ;
 n représente 1, 2 ou 3 ; et
 m représente 0 à (6-n) ;

 la composition comprenant zéro à moins de 0,5 partie en poids d'agents absorbant les ultraviolets de type benzotriazole ; et
 dans laquelle toutes les parties en poids sont rapportées à 100 parties en poids du total du poly(phénylène éther), du copolymère à blocs hydrogénés, de la polyoléfine et du retardateur de flamme.

2. Composition selon la revendication 1, dans laquelle le poly(phénylène éther) est un poly(2,6-diméthyl-1,4-phénylène éther) ayant une viscosité intrinsèque de 0,35 à 0,5 décilitre par gramme, mesurée à l'aide d'un viscosimètre Ubbelohde 25 °C dans le chloroforme ; ou dans laquelle le poly(phénylène éther) a une viscosité intrinsèque de 0,35 à 0,5 décilitre par gramme, mesurée à l'aide d'un viscosimètre Ubbelohde à 25 °C dans le chloroforme, et comprend un homopolymère du poly(phénylène éther) et un copolymère à blocs poly(phénylène éther)-polysiloxane.

3. Composition selon l'une des revendications 1 à 2, dans laquelle le copolymère à blocs hydrogénés comprend 70 à 100 pourcents en poids d'un copolymère à blocs à gradient de composition polystyrène-poly(éthylène-butylène-styrène)-polystyrène, par rapport au poids du copolymère à blocs hydrogénés.

4. Composition selon l'une des revendications 1 à 3, dans laquelle la polyoléfine comprend 35 à 55 pourcents en poids de polypropylène, 30 à 50 pourcents en poids de polybutène et 5 à 25 pourcents en poids d'un copolymère éthylène-propylène, par rapport au poids de la polyoléfine.

5. Composition selon l'une des revendications 1 à 4, dans laquelle le retardateur de flamme comprend 10 à 35 pourcents en poids d'un dialkylphosphinate métallique, 15 à 30 pourcents en poids de polyphosphate de mélamine et 35 à 65 pourcents en poids d'un ester organophosphate, par rapport au poids du retardateur de flamme.

6. Composition selon l'une des revendications 1 à 5, dans laquelle

$R^1$ et $R^2$ représentent un méthyle à chaque occurrence ;
$R^3$ représente indépendamment à chaque occurrence un hydroxyle, un méthyle ou un méthoxyle ;
X représente -O- à chaque occurrence ;
n représente 1 ou 2, et
m représente 0 ou 1.

**7.** Composition selon l'une des revendications 1 à 5,
$R^1$ et $R^2$ représentent un méthyle à chaque occurrence ;
$R^3$ représente un méthoxyle ;
X représente -O- à chaque occurrence ;
n représente 1 ; et
m représente 1.

**8.** Composition selon l'une des revendications 1 à 7, qui comprend en outre 0,5 à 10 parties en poids d'un poly(oxyde d'alkylène), de préférence dans laquelle le poly(oxyde d'alkylène) comprend un poly(oxyde de propylène)mono(alkyle en $C_1$-$C_{12}$)éther.

**9.** Composition selon l'une des revendications 1 à 8, à l'exclusion d'agents absorbant les ultraviolets de type benzotriazole, à l'exclusion d'agents absorbant les ultraviolets de type triazine, ou à l'exclusion des deux.

**10.** Composition selon la revendication 1,
dans laquelle le poly(phénylène éther) est un poly(2,6-diméthyl-1,4-phénylène éther) ayant une viscosité intrinsèque de 0,35 à 0,5 décilitre par gramme ;
dans laquelle le copolymère à blocs hydrogénés comprend 70 à 100 pourcents en poids d'un copolymère à blocs à gradient de composition polystyrène-poly(éthylène-butylène-styrène)-polystyrène, par rapport au poids du copolymère à blocs hydrogénés ;
dans laquelle la polyoléfine comprend 35 à 55 pourcents en poids de polypropylène, 30 à 50 pourcents en poids de polybutène, et 5 à 25 pourcents en poids d'un copolymère éthylène-propylène, par rapport au poids de la polyoléfine ;
dans laquelle le retardateur de flamme comprend 10 à 35 pourcents en poids d'un dialkylphosphinate métallique, 15 à 30 pourcents en poids d'un polyphosphate de mélamine, et 35 à 65 pourcents en poids d'un ester organophosphate, par rapport au poids du retardateur de flamme ;
dans laquelle

$R^1$ et $R^2$ représentent un méthyle à chaque occurrence ;
$R^3$ représente indépendamment à chaque occurrence un hydroxyle, un méthyle ou un méthoxyle ;
X représente -O- à chaque occurrence ;
n représente 1 ou 2, et
m représente 0 ou 1 ; et

la composition comprenant

17 à 33 parties en poids du poly(phénylène éther),
25 à 41 parties en poids du copolymère à blocs hydrogénés,
12 à 26 parties en poids de la polyoléfine ;
18 à 32 parties en poids du retardateur de flamme, et
0,3 à 4 parties en poids du photostabilisant de type amine à empêchement stérique.

**11.** Composition selon la revendication 10,
dans laquelle le copolymère à blocs à gradient de composition polystyrène-poly(éthylène-butylène-styrène)-polystyrène a une teneur en polystyrène de 35 à 45 pourcents en poids, par rapport au poids du copolymère à blocs à gradient de composition, et un indice de fluidité de 3 à 15 grammes par 10 minutes, mesuré à 260 °C sous une charge de 5 kilogrammes selon ASTM D1238 ;
dans laquelle le dialkylphosphinate métallique comprend du tris(diéthylphosphinate) d'aluminium ;
dans laquelle l'ester organophosphate comprend du bis(diphénylphosphate) de bisphénol A ; et
dans laquelle m représente 1, n représente 1, et $R^3$ représente un méthoxyle.

**12.** Conducteur isolé, comprenant :

un conducteur ; et
un revêtement isolant disposé par-dessus le conducteur ;
dans lequel le revêtement isolant comprend une composition comprenant

15 à 35 parties en poids d'un poly(phénylène éther) ;
23 à 43 parties en poids d'un copolymère à blocs hydrogénés d'un monomère alcénylaromatique et d'un diène conjugué ;
10 à 30 parties en poids d'une polyoléfine ;
15 à 35 parties en poids d'un retardateur de flamme ; et
0,2 à 5 parties en poids d'un photostabilisant de type amine à empêchement stérique ayant la structure

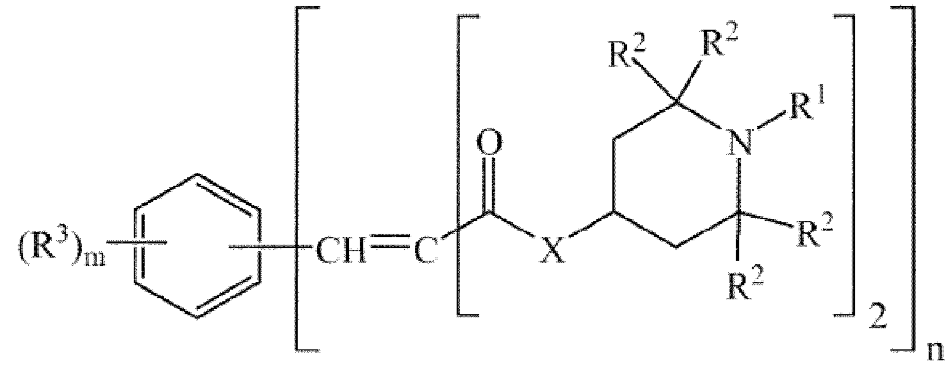

dans laquelle

$R^1$ et $R^2$ représentent indépendamment à chaque occurrence un hydrogène ou un alkyle en $C_1$-$C_4$ ;
$R^3$ représente indépendamment à chaque occurrence un hydroxyle, un alkyle en $C_1$-$C_6$ ou un alcoxyle en $C_1$-$C_6$ ;
X représente indépendamment à chaque occurrence -O- ou -$NR^4$-, où $R^4$ est un hydrogène ou un alkyle en $C_1$-$C_6$ ;
n représente 1, 2 ou 3 ; et
m représente 0 à (6-n) ;

la composition comprenant zéro à moins de 0,5 partie en poids d'agents absorbant les ultraviolets de type benzotriazole ; et
dans laquelle toutes les parties en poids sont rapportées à 100 parties en poids du total du poly(phénylène éther), du copolymère à blocs hydrogénés, de la polyoléfine et du retardateur de flamme.

**13.** Conducteur isolé selon la revendication 12,
dans lequel le poly(phénylène éther) est un poly(2,6-diméthyl-1,4-phénylène éther) ayant une viscosité intrinsèque de 0,35 à 0,5 décilitre par gramme ;
dans lequel le copolymère à blocs hydrogénés comprend 70 à 100 pourcents en poids d'un copolymère à blocs à gradient de composition polystyrène-poly(éthylène-butylène-styrène)-polystyrène, par rapport au poids du copolymère à blocs hydrogénés ;
dans lequel la polyoléfine comprend 35 à 55 pourcents en poids de polypropylène, 30 à 50 pourcents en poids de polybutène, et 5 à 25 pourcents en poids d'un copolymère éthylène-propylène, par rapport au poids de la polyoléfine ;
dans lequel le retardateur de flamme comprend 10 à 35 pourcents en poids d'un dialkylphosphinate métallique, 15 à 30 pourcents en poids d'un polyphosphate de mélamine, et 35 à 65 pourcents en poids d'un ester organophosphate, par rapport au poids du retardateur de flamme ;
dans lequel

$R^1$ et $R^2$ représentent un méthyle à chaque occurrence ;
$R^3$ représente indépendamment à chaque occurrence un hydroxyle, un méthyle ou un méthoxyle ;
X représente -O- à chaque occurrence ;
n représente 1 ou 2, et
m représente 0 ou 1 ; et

la composition comprenant

17 à 33 parties en poids du poly(phénylène éther),
25 à 41 parties en poids du copolymère à blocs hydrogénés,
12 à 26 parties en poids de la polyoléfine ;
18 à 32 parties en poids du retardateur de flamme, et
0,3 à 4 parties en poids du photostabilisant de type amine à empêchement stérique.

**14.** Câble gainé, comprenant :

un conducteur ;
un revêtement isolant entourant le conducteur ; et
une gaine entourant l'isolation ;
dans lequel la gaine comprend une composition comprenant :

15 à 35 parties en poids d'un poly(phénylène éther) ;
23 à 43 parties en poids d'un copolymère à blocs hydrogénés d'un monomère alcénylaromatique et d'un diène conjugué ;
10 à 30 parties en poids d'une polyoléfine ;
15 à 35 parties en poids d'un retardateur de flamme ; et
0,2 à 5 parties en poids d'un photostabilisant de type amine à empêchement stérique ayant la structure

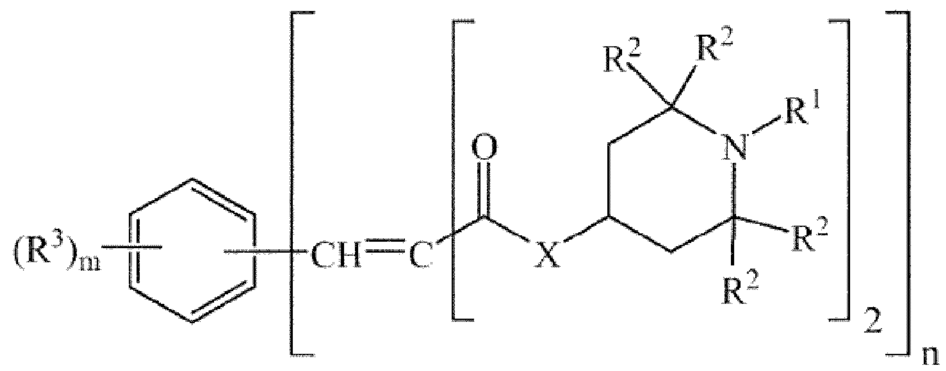

dans laquelle

$R^1$ et $R^2$ représentent indépendamment à chaque occurrence un hydrogène ou un alkyle en $C_1$-$C_4$ ;
$R^3$ représente indépendamment à chaque occurrence un hydroxyle, un alkyle en $C_1$-$C_6$ ou un alcoxyle en $C_1$-$C_6$ ;
X représente indépendamment à chaque occurrence -0- ou -$NR^4$-, où $R^4$ est un hydrogène ou un alkyle en $C_1$-$C_6$ ;
n représente 1, 2 ou 3 ; et
m représente 0 à (6-n) ;

la composition comprenant zéro à moins de 0,5 partie en poids d'agents absorbant les ultraviolets de type benzotriazole ; et
dans laquelle toutes les parties en poids sont rapportées à 100 parties en poids du total du poly(phénylène éther), du copolymère à blocs hydrogénés, de la polyoléfine et du retardateur de flamme.

**15.** Câble gainé selon la revendication 14,
dans lequel le poly(phénylène éther) est un poly(2,6-diméthyl-1,4-phénylène éther) ayant une viscosité intrinsèque de 0,35 à 0,5 décilitre par gramme ;
dans lequel le copolymère à blocs hydrogénés comprend 70 à 100 pourcents en poids d'un copolymère à blocs à gradient de composition polystyrène-poly(éthylène-butylène-styrène)-polystyrène, par rapport au poids du copolymère à blocs hydrogénés ;
dans lequel la polyoléfine comprend 35 à 55 pourcents en poids de polypropylène, 30 à 50 pourcents en poids de polybutène, et 5 à 25 pourcents en poids d'un copolymère éthylène-propylène, par rapport au poids de la polyoléfine ;

dans lequel le retardateur de flamme comprend 10 à 35 pourcents en poids d'un dialkylphosphinate métallique, 15 à 30 pourcents en poids d'un polyphosphate de mélamine, et 35 à 65 pourcents en poids d'un ester organophosphate, par rapport au poids du retardateur de flamme ;
dans lequel

$R^1$ et $R^2$ représentent un méthyle à chaque occurrence ;
$R^3$ représente indépendamment à chaque occurrence un hydroxyle, un méthyle ou un méthoxyle ;
X représente -O- à chaque occurrence ;
n représente 1 ou 2, et
m représente 0 ou 1 ; et

la composition comprenant

17 à 33 parties en poids du poly(phénylène éther),
25 à 41 parties en poids du copolymère à blocs hydrogénés,
12 à 26 parties en poids de la polyoléfine ;
18 à 32 parties en poids du retardateur de flamme, et
0,3 à 4 parties en poids du photostabilisant de type amine à empêchement stérique.

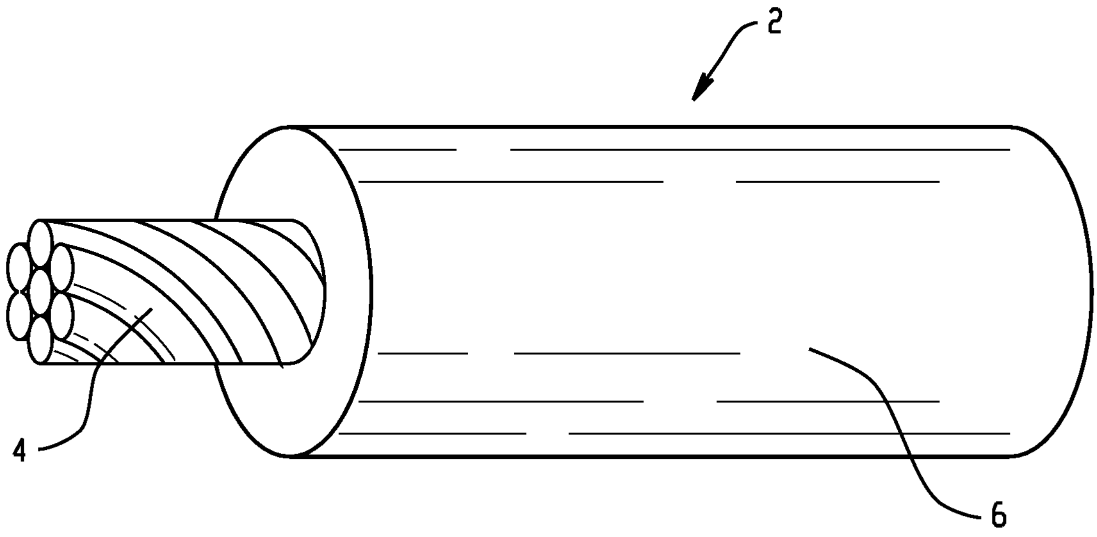


Fig. 1

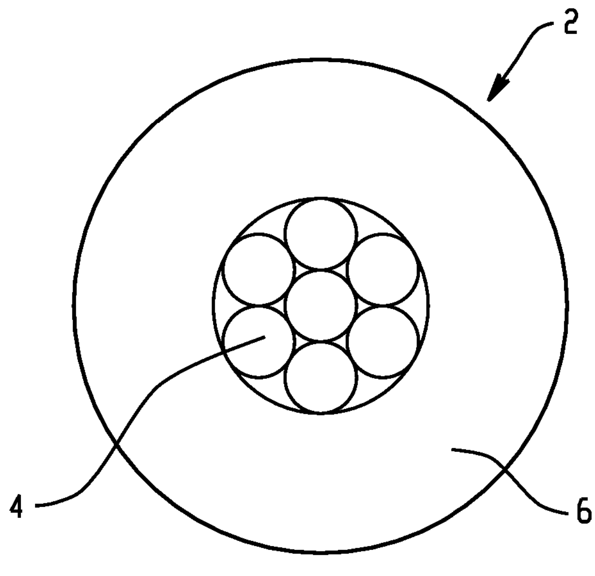


Fig. 2

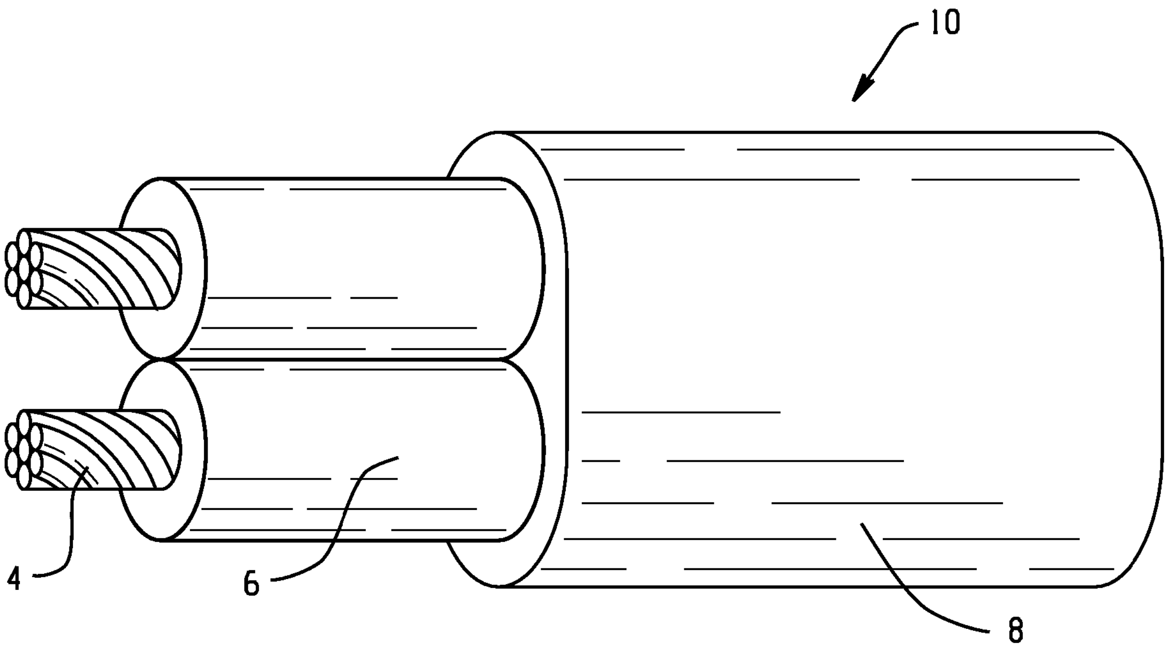


Fig. 3

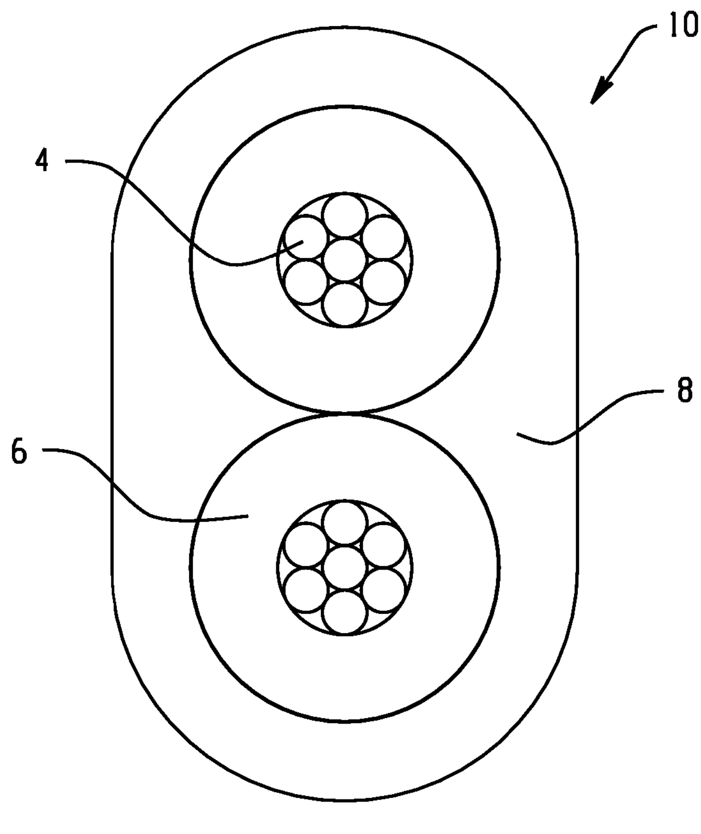


Fig. 4

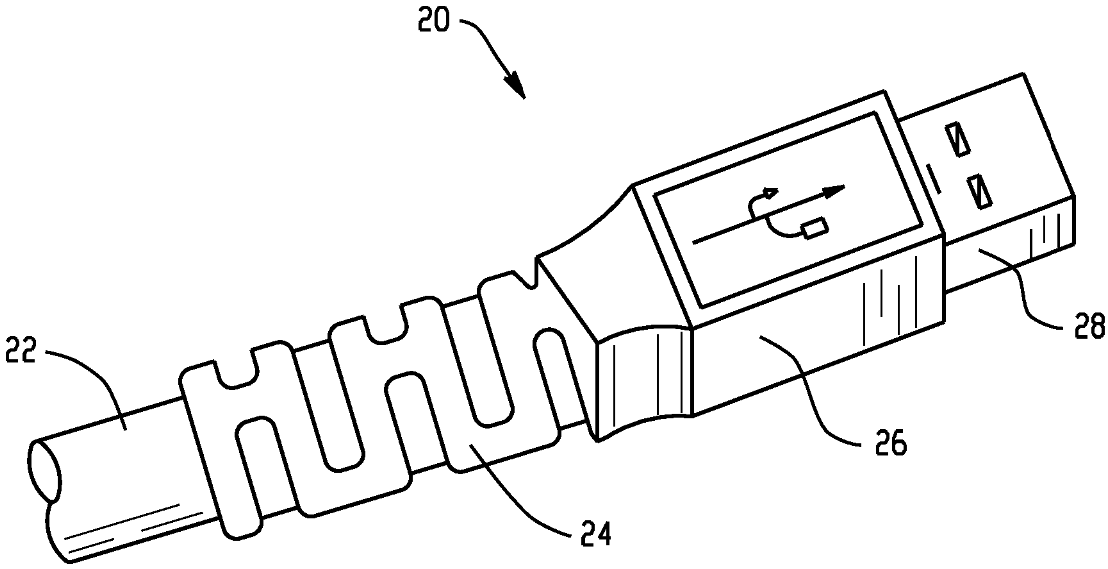


Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013121363 A2
- US 6153676 A
- US 20060068317 A1
- US 20060247338 A1
- US 8017697 B
- US 8669332 B, Carrillo
- US 6025419 A, Kasowski
- US 6015510 A, Jacobson
- US 20060131052 A1, Mhetar


### Non-patent literature cited in the description


- *CHEMICAL ABSTRACTS,* 89492-23-9
- *CHEMICAL ABSTRACTS,* 78-33-1
- *CHEMICAL ABSTRACTS,* 57583-54-7
- *CHEMICAL ABSTRACTS,* 181028-79-5
- *CHEMICAL ABSTRACTS,* 115-86-6
- *CHEMICAL ABSTRACTS,* 68937-41-7
- *CHEMICAL ABSTRACTS,* 56803-37-3
- *CHEMICAL ABSTRACTS,* 65652-41-7
- *CHEMICAL ABSTRACTS,* 20208-95-1
- *CHEMICAL ABSTRACTS,* 15541 60-3
- *CHEMICAL ABSTRACTS,* 56386-64-2
- *CHEMICAL ABSTRACTS,* 15541-60-3
- *CHEMICAL ABSTRACTS,* 1309-42-8
- *CHEMICAL ABSTRACTS,* 21645-51-2
- *CHEMICAL ABSTRACTS,* 21041-93-0
- *CHEMICAL ABSTRACTS,* 25134-01-4
- *CHEMICAL ABSTRACTS,* 24938-67-8
- *CHEMICAL ABSTRACTS,* 1202019-56-4
- *CHEMICAL ABSTRACTS,* 66070-58-4
- *CHEMICAL ABSTRACTS,* 9010-79-1
- *CHEMICAL ABSTRACTS,* 72623-83-7
- *CHEMICAL ABSTRACTS,* 26221-73-8
- *CHEMICAL ABSTRACTS,* 9003-07-0
- *CHEMICAL ABSTRACTS,* 9003-29-6
- *CHEMICAL ABSTRACTS,* 2725-22-6
- *CHEMICAL ABSTRACTS,* 103597-45-1
- *CHEMICAL ABSTRACTS,* 70321-86-7
- *CHEMICAL ABSTRACTS,* 152261-33-1
- *CHEMICAL ABSTRACTS,* 147783-69-5
- *CHEMICAL ABSTRACTS,* 106990-43-6
- *CHEMICAL ABSTRACTS,* 2386-87-0
- *CHEMICAL ABSTRACTS,* 225789-38-8
- *CHEMICAL ABSTRACTS,* 5945-33-5
- *CHEMICAL ABSTRACTS,* 2082-79-3
- *CHEMICAL ABSTRACTS,* 119345-01-6
- *CHEMICAL ABSTRACTS,* 32687-78-8
- *CHEMICAL ABSTRACTS,* 31570-04-4
- *CHEMICAL ABSTRACTS,* 112-84-5
- *CHEMICAL ABSTRACTS,* 13463-67-7
- *CHEMICAL ABSTRACTS,* 1309-37-1
- *CHEMICAL ABSTRACTS,* 57455-37-5